# EUROPÄISCHE PATENTSCHRIFT

(11) **EP 2 591 057 B1**
(45) Veröffentlichungstag und Bekanntmachung des Hinweises auf die Patenterteilung: **12.06.2019**
(21) Anmeldenummer: 11738654.0
(22) Anmeldetag: 05.07.2011
(51) Int. Cl.: C09B 67/46, C09B 67/08, C08K 5/00, C08L 33/10

(54) **WASSERBASIERTE FLÜSSIGFARBE ENTHALTEND THERMOSTABILE DISPERGIERADDITIVE FÜR DIE EINFÄRBUNG VON POLY(METH)ACRYLATEN**
WATER-BASED LIQUID COLOR CONTAINING THERMOSTABLE DISPERSION ADDITIVES FOR COLORING POLY(METH)ACRYLATES
COLORANT LIQUIDE À BASE D'EAU RENFERMANT DES ADDITIFS DE DISPERSION THERMOSTABLES POUR COLORER DES POLY(MÉTH)ACRYLATES

(30) Priorität: 09.07.2010 DE 102010031183
(43) Veröffentlichungstag der Anmeldung: 15.05.2013
(73) Patentinhaber: Evonik Röhm GmbH, 64293 Darmstadt (DE)
(72) Erfinder: SCHWARZ-BARAC, Sabine, 64560 Riedstadt (DE); RECKTENWALD, Roger, 64625 Bensheim (DE); GOLDACKER, Thorsten, 64380 Roßdorf (DE); GOLCHERT, Ursula, 64807 Dieburg (DE); KHRENOV, Victor, 60323 Frankfurt (DE); NAU, Stefan, 64572 Büttelborn (DE); MEHLER, Nils, 64395 Brensbach (DE); SADO, Krzysztof, 64331 Weiterstadt (DE); BECKER, Ernst, 64625 Bensheim (DE); BENDZKO, Norbert, 51375 Leverkusen (DE); HENN, Joachim, 51709 Marienheide (DE); VOGT, Markus, 51069 Köln (DE); SCHUBERT, Markus, 53797 Lohmar (DE); CLEFF, Daniel, 34454 Bad Arolsen (DE); RIEDEL-BENDZKO, Birgit, 51375 Leverkusen (DE)
(74) Vertreter: Evonik Patent Association
(86) Internationale Anmeldenummer: PCT/EP2011/061303
(87) Internationale Veröffentlichungsnummer: WO 2012/004257

(56) Entgegenhaltungen:
- EP-A2- 1 529 821
- WO-A1-2010/020474
- WO-A2-2008/080580
- DE-A1-102006 062 439
- "Waterborne binder-containing pigment concentrates based on different organic pigments with TEGO Dispers 755 W", , Mai 2009 (2009-05), XP55013514, Gefunden im Internet: URL:http://evonik.tego.de/pdf/richt/engl/7 55_h_02.pdf [gefunden am 2011-11-30]
- "Waterborne binder-free pigment concentrates based on different organic pigments with TEGO Dispers 755 W", , August 2008 (2008-08), XP55013515, Gefunden im Internet: URL:http://evonik.tego.de/pdf/richt/engl/7 55_f_02.pdf [gefunden am 2011-11-30]
- "Waterborne binder-free pigment concentrates based on different organic pigments with TEGO Dispers 651", , Juni 2002 (2002-06), XP55013511, Gefunden im Internet: URL:http://evonik.tego.de/pdf/richt/engl/6 51_f_02.pdf [gefunden am 2011-11-30]
- "Solventborne, binder-containing pigment concentrates based on different pigments with TEGO Dispers 655", EVONIK Industries, Februar 2009 (2009-02), XP55013536, Gefunden im Internet: URL:http://evonik.tego.de/pdf/richt/engl/6 55_h_01.pdf [gefunden am 2011-11-30]
- "Waterborne binder-free pigment concentrates based on different organic pigments with TEGO Dispers 650", , Juni 2002 (2002-06), XP55013513, Gefunden im Internet: URL:http://evonik.tego.de/pdf/richt/engl/6 50_f_02.pdf [gefunden am 2011-11-30]
- BYK Additives & Instruments, BYK-Chemie GmbH: "DYSPERBYK-190, DYSPERBYK-191, DYSPERBYK-192, DYSPERBYK-194", Merkblatt W210, Februar 2008 (2008-02), XP55016142, Gefunden im Internet: URL:http://www.byk.com/en/additives/additi ves-by-name/disperbyk-190.php [gefunden am 2012-01-11]
- Tim Wright: "Additives Market Review & Forecast", , 23. Dezember 2009 (2009-12-23), XP55013539, Gefunden im Internet: URL:http://www.coatingsworld.com/issues/20 10-01/view_features/additives-market-revie w-amp-forecast/ [gefunden am 2011-11-30]

## Beschreibung

Die Erfindung betrifft ein Verfahren zur Einfärbung von thermoplastischen Kunststoffformmassen, bevorzugt von einer Polymethyl(meth)acrylat-Formmasse, mit wässrigen Farbmittelpräparationen.

Farbmittelpräparation zur Einfärbung von Kunststoffgegenständen sind bekannt.

So beschreibt die US-PS 3,956,008 eine flüssige Dispersion zur Einfärbung von Kunststoffgegenständen, bestehend aus anorganischen Partikeln zwischen 2 und 50 µm Größe und einem oberflächenaktiven System aus Sorbit-Estern. Wässrige Systeme werden nicht beschrieben.

US-PS 3,992,343 beschreibt ein wässriges Dispersionssystem, bestehend aus organischen oder anorganischen Pigmentpartikeln, Wasser und einem Dispersionsmittel, wobei das Dispersionsmittel sehr spezifisch ist.

US-PS 4,091,034 beschreibt eine blaue, wasserlösliche Farbstoffformulierung eines Triphenylmethanfarbstoffs. Als wässrige Dispersion wird er zur Färbung von Textilien eingesetzt.

US-PS 4,167,503 beschreibt eine flüssige Formulierung, basierend auf einem Träger aus einem PolyoxyethylenDerivat, PEG und einem weiteren Additiv. Wasser als Lösungsmittel wird nicht verwendet.

US-PS 4,169,203 beschreibt wasserlösliche, polymere Pigmente, die aus einem nicht chromophoren polymeren Gerüst und darauf chemisch gebundenen chromophoren Gruppen bestehen.

US-PS 4,341,565 beschreibt eine flüssige Farbstoffformulierung aus festem Pigment, eine flüssige Phase aus Estern aus langkettigen Alkoholen und langkettigen Säuren sowie einem Gelierhilfsmittel.

US-PS 4,871,416 beschreibt ebenfalls Rezepturen auf organischer Basis.

US-PS 4,634,471 beschreibt Rezepturen mit organischen Lösungsmitteln.

US-PS 4,804,719 beschreibt eine wasserdispergierbare Formulierung, enthaltend ein Polymer.

US-PS 4,910,236 beschreibt eine Druckfarbe, aufgebaut aus einer wässrigen Emulsion aus Wasser und Emulgator und einer organischen Phase aus olefinischen Harzen und Pigment. In einem Folgeschritt wird der Formulierung das Wasser entzogen.

US-PS 5,043,376 beschreibt ein nicht wässriges System.

US-PS 5,104,913 stellt eine Teilanmeldung zu US-PS'376 und beschreibt ein Verfahren zur Herstellung einer wässrigen Farbstoffdispersion, Öl in Wasser.

US-PS 5,308,395 beschreibt ebenfalls eine organische Lösung.

Ein hydrophiles Farbmittel und Wasser werden in US-PS 5,328,506 zu einem Teig geformt, der mit den üblichen Werkzeugen und Maschinen bei der Farbstoffherstellung weiter verarbeitet werden kann.

US-PS 5,759,472 beschreibt ein Verfahren zum Formen von Kunststoffen, bestehend aus folgenden Schritten: Herstellung einer Farbmischung aus einem Träger (10 - 75 %), Wasser (0 - 15 %), einem Dispergiermittel (0,1 - 10 %) und einem Farbmittel (10 - 80 %). Zusätzlich können noch Polyole enthalten sein. In einem weiteren Verfahrenschritt wird ein pulverförmiges Polymer bereitgestellt, anschließend das Trägersystem mit dem Polymerpulver gemischt und zu der Mischung verarbeitet (PE). Ein Unteranspruch ist auf die Menge von 1 - 14 % Wasser gerichtet.

US-PS 6,428,733 beschreibt ein flüchtiges System, es enthält eine Mischung aus Glycerin und Wasser.

US-PS 6,649,122 beschreibt ein Verfahren zur Einfärbung von thermoplastischen Kunststoffen, bei dem man 10 bis 80 Prozent Farbmittel und maximal 30 Prozent Dispergiermittel einsetzt, der Rest ist Wasser als Lösungsmittel. Als Dispergiermittel werden Polyvinylpyrrolidone, wie beispielsweise Sokolan® HP50 (BASF) oder neutralisierte Polyacrylsäuren, Salze von Ligninsulfonsäuren, von Naphthalinsulfonsäuren oder vom polymeren Carbonsäuren eingesetzt. Vorzugsweise werden nicht-ionische Dispergiermittel eingesetzt, wie beispielsweise Nonylphenol oder Octylphenol.

DE 10 2006 062439 A1 offenbart Kamm(block)copolymere erhältlich durch Umsetzung von I wenigstens einem (Block)Copolymerisat umfassend polymerisierte, ggf. substituierte Styrol- und Maleinsäureanhydrid-Einheiten, das durch lebende, radikalische Polymerisation erhalten wurde, mit II wenigstens einem eine primäre Aminoendgruppe aufweisenden Polyalkylenoxidmonoamin bei einer Reaktionstemperaturen von ≥ 150°C und durch eine anschließende Versalzung von wenigstens 25 mol% der freien Carboxylgruppen des Umsetzungsproduktes bei einer Reaktionstemperatur < 100°C und ggf. nach Zugabe von H₂O.

WO 2008/080580 A2 beschreibt modifizierte Kammcopolymere umfassend die Struktureinheiten, deren Herstellung durch Umsetzung von SMA-Harzen und gegebenenfalls speziellen Copolymerisaten mit einer Mischung aus wenigstens einem Polyalkylenoxidmonoamin und wenigstens einem Aminoalkohol, mit einer Mischung aus wenigstens einem Polyalkylenoxidmonoamin und wenigstens einem N,N-disubstituierten Diamin oder einer Mischung aus wenigstens einem Polyalkylenoxidmonoamin, wenigstens einem N,N-disubstituierten Diamin und wenigstens einem Polymeren ausgewählt aus der Gruppe bestehend aus monohydroxyterminierten Polyalkylenoxiden, monohydroxyterminierten Polyestern und monohydroxyterminierten Blockcopolymeren aus Polyalkylenoxidund Polyester-Blöcken, deren anschliessende, zumindest teilweise Umsetzung der monohydroxyterminierten Seitenketten zu Phosphorsäuresestern bzw. der N',N-disubstituierten aminotermierten Seitenketten zu quartären Ammoniumsalzen und deren Verwendung als Netz- und Dispergiermittel.

Nachteilig bei den oben genannten Lösungen des Standes der Technik ist die mehr oder weniger intensive Verwendung von organischen, Lösungsmitteln in der Farbmittelformulierung.

Die Verwendung von organischen Lösungsmitteln in Kunststoffformmassen führt zu einem Anstieg der Konzentration von niedermolekularen organischen Verbindungen im Polymer und dadurch zu einer Verschlechterung der Eigenschaften der Polymere, wie beispielsweise Absenkung der Vicat-Erweichungstemperatur oder zu einer höheren Spannungsrißempfindlichkeit der aus den Polymeren hergestellten Gegenstände.

Die auf dem Markt erhältlichen Flüssigfarben enthalten in der Regel Fettsäureester oder Weißöle als Bindemittel, die nach der Einfärbung im Polymerisat verbleiben und zu einer Absenkung der Vicat-Erweichungstemperatur führen. Ferner lassen sich Belagbildungen beim Spritzguß beobachten.

Einen neuen Ansatz zur Herstellung von wasserbasierten Farbmittelpräparationen für thermoplastische Kunststoffformmassen offenbart die WO 2010/020474 A1. Die dort offenbarten Farbmittelpräparationen weisen jedoch den Nachteil auf, dass die damit eingefärbten Formmassen bei hoher bzw. lang anhaltender thermischer Belastung vergilben können.

Aufgabe der vorliegenden Erfindung ist es daher, ein Verfahren zur Einfärbung von thermoplastischen Kunststoffformmassen zur Verfügung zu stellen, die die oben skizzierten Nachteile des Standes der Technik nicht oder nur in verringertem Maße aufweist und das sich für die Einfärbung von thermoplastischen Kunststoffformmassen einsetzen lässt. Eine spezielle Aufgabe bestand darin ein Verfahren zur Einfärbung von thermoplastischen Kunststoffformmassen zur Verfügung zu stellen, die sicher stellen, dass damit eingefärbte Formmassen auch bei thermischer Belastung nur eine geringe Gelbwert-Erhöhung zeigen.

Die erfindungsgemäß eingesetzte Farbmittelpräparation soll in einer weiteren speziellen Aufgabe universell variierbar sein.

In einer noch weiteren Aufgabe soll die erfindungsgemäß verwendete Farbmittelpräparation dazu beitragen, dass die Farbortschwankungen in den eingefärbten Formmassen geringer sind als bei den Farbmittelpräparationen des Standes der Technik.

Weitere, nicht explizit genannte Aufgaben ergeben sich aus dem Gesamtzusammenhang der nachfolgenden Beschreibung, Beispiele und Ansprüche.

Die Erfinder haben nun überraschend gefunden, dass beim Einsatz von Dispergierhilfsmitteln, welche in getrocknetem Zustand einen Masseverlust von maximal 15 Gew.-% bei isothermer thermogravimetrischer Analyse für 60 min bei 260°C aufweisen, wässrige Farbmittelpräparationen hergestellt werden können, die es erlauben, thermoplastische Formmassen derart einzufärben, dass diese auch bei längerer und/oder stärkerer thermischer Belastung nicht oder nur sehr wenig vergilben und sehr geringe Farbortschwankungen aufweisen.

Ohne an eine bestimmte Theorie gebunden zu sein, sind die Erfinder der Ansicht, dass die erfindungsgemäß verwendeten speziellen Dispergieradditive dadurch, dass sie bei längerer und/oder stärkerer thermischer Belastung weniger stark pyrolysiert werden, weniger kurzkettige Kohlenstofffragmente bilden und somit weniger zur Vergilbung beitragen. Es ist somit mit der vorliegenden Erfindung erstmals gelungen, direkt mit wasserbasierter Flüssigfarbe eingefärbte thermoplastische Formmassen herzustellen, die bei hohen Temperaturen extrudiert werden bzw. die über längere Zeit hohen Temperaturbelastungen ausgesetzt werden können.

Gegenstand der vorliegenden Erfindung sind daher Verwendung einer wässrigen Farbmittelpräparationen gemäß Anspruch 1, eingefärbte Formmassen bzw. thermoplastische Kunststoffe nach einem der Ansprüche 4, oder 5 sowie ein Verfahren zur Einfärbung von thermoplastische Kunststoffen nach Anspruch 6.

Weitere bevorzugte Gegenstände der vorliegenden Erfindung ergeben sich aus der nachfolgenden Beschreibung, den Beispielen und den Unteransprüchen.

Die vorliegende Erfindung wird nachfolgend im Detail beschrieben.

Die Erfindung betrifft Verwendung einer wässrigen Farbmittelpräparation zur Einfärbung von thermoplastischen Kunststoffformmassen,
dadurch gekennzeichnet, dass sie
a) 1 Gew.-% bis 49 Gew.-%, bevorzugt 5 Gew.-% bis 45 Gew.-%, besonders bevorzugt 10 Gew.-% bis 40 Gew.-% eines Dispergieradditives welches einen Masseverlust von maximal 15 Gew.-% bei isothermer thermogravimetrischer Analyse für 60 min bei 260°C aufweist,
b) 0,5 Gew-% bis 50 Gew.-% eines organischen löslichen Farbstoffs,
c) 0 Gew-% bis 50 Gew.-% Hilfsstoffe, und
d) 0 Gew-% bis 98,5 Gew.-% Wasser, bevorzugt VE-Wasser,
enthält, wobei sich die Gewichtsteile der Komponenten a) bis d) zu 100 Gew.-% ergänzen und als Dispergieradditiv
- ein hochmolekulares Copolymer, umfassend zumindest Maleinsäureanhydrid, Styrol und ein Aminopolyether als Monomereinheiten; oder
- ein Copolymer der Methacrylsäure mit hydrophoben Methacrylat; oder
- Copolymere von Polyethern, bevorzugt Ethylen-, Propylen- und/oder Butylenoxid, und Styroloxid
verwendet wird, wobei
der organische lösliche Farbstoff ein Anthrapyrimidin, Chinophthalon, Perinon oder Monoazofarbstoff ist, und
die Bestimmung des Masseverlusts des reinen Dispergieradditivs in getrockneter Form mit einer Heizrate von 5 K/min bis 260°C und anschließender 60 min isothermer Analyse bei 260°C erfolgt, wobei das Dispergieradditiv vor der Messung nicht konditioniert sondern bis zur Massenkonstanz in einem Trockenofen getrocknet wird; und die Bestimmung des Masseverlusts von einem Perlpolymerisat am festen Perlpolymerisat durchgeführt wird.

Wobei das Wasser in Komponente d) unabhängig von eventuell über Komponente a) eingebrachtem Wasser zu sehen ist. In Komponente a) kann das Dispergieradditiv in Reinform als auch als wässrige Lösung eingebracht werden.

Es hat sich erwiesen, dass Formmassen thermoplastischer Kunststoffe bei Einfärbung mit Farbmittelpräparationen nach der WO 2010/020474 bei hoher und/oder langer thermischer Belastung, z. B. Spritzguß bei 290°C, zu stark vergilben können (Farbortverschiebung). Die Erfinder haben als Ursache hierfür das Dispergierhilfsmittel EFKA 4550 der Fa. Ciba identifiziert. So wurde z.B. gefunden, dass die thermische Belastung eines reinen EFKA 4550-Kompounds (nur Standard-Formmasse unter Zusatz des EFKA 4550 ohne sonstige Bestandteile der Farbmittelpräparation) zu einem stark erhöhten Gelbwert führt.

Durch die erfindungsgemäße Verwendung der wässrigen Farbmittelpräparation gelingt es in überraschender und nicht zu erwartender Weise, diese Probleme mit der Vergilbung zu lösen, gleichzeitig aber auch sicherzustellen, dass neben einer guten Einfärbung der thermoplastischen Kunststoffformmasse auch eine Konstanthaltung oder sogar Erhöhung der Vicat-Erweichungstemperatur des aus der eingefärbten thermoplastischen Kunststoffformasse hergestellten Kunststoffformkörpers erzielt werden kann. Die übrigen mechanischen Eigenschaften der Kunststoffformkörper bleiben unverändert.

Die erfindungsgemäße Verwendung der Farbmittelpräparationen mit dem/den spezifischen Dispergieradditiv/en erlaubt problemlos den Einsatz für die kontinuierliche Einfärbung von thermoplastischen Kunststoffformmassen.

Trotz der verbesserten Auswirkungen auf den Gelbwert wurde überraschend gefunden, dass die erfindungsgemäß verwendeten spezifischen Dispergier-Additive mit einen Masseverlust von maximal 15 Gew.-% bei isothermer thermogravimetrischer Analyse für 60 min bei 260°C, weiterhin in der Lage sind, die Farbmittel in der wässrigen Phase ausreichend zu stabilisieren und die Agglomeration und in der Folge die Sedimentation der Farbmittel zu verhindern.

Erfindungsgemäß wird ein Dispergieradditiv mit einem Masseverlust in getrockenetem Zustand von maximal 15 Gew.-%, bevorzugt 0,1 bis 10 Gew.-%, besonders bevorzugt 0,5 bis 7 Gew.-%,ganz besonders bevorzugt 0,5 bis 5 Gew.-% und speziell bevorzugt 1 bis 4 Gew-% bei isothermer thermogravimetrischer Analyse für 60 min bei 260°C, eingesetzt.

Geeignete kommerziell erhältliche Beispiele hierfür sind Tego® Dispers 750W und 755W der Fa. Evonik Goldschmidt GmbH und Disperbyk® 190 der Fa. Byk-Chemie. Tego® Dispers 755W wird z. B. als polymeres, lösungsmittelfreies Netz- und Dispergier-Additiv als 40%ige Lösung in den Handel gebracht.

Bevorzugt verwendet werden können z. B. auch solche Dispergiermittel wie sie in der EP 1 026 178 B1, welche hiermit explizit in die Beschreibung der vorliegenden Anmeldung mit aufgenommen wird, beschrieben werden. Insbesondere die dort im Herstellbeispiel beschriebenen hochmolekularen Copolymeren, umfassend zumindest Maleinsäureanhydrid, Styrol und ein Aminopolyether als Monomereinheiten, können erfindungsgemäß als Dispergiermittel eingesetzt werden. Bevorzugt eingesetzte Dispergiermittel weisen ein (gewichts)-mittleres Molekulargewicht von 20.000 bis 50.000 g/mol auf.

In einer weiteren bevorzugten Ausführungsform wird eine wässrige, alkalische Lösung eines Copolymeren der Methacrylsäure mit hydrophoben Methacrylat als Dispergieradditiv verwendet. Es wird aus einem Suspensionspolymerisat der o.g. Zusammensetzung durch alkalische Hydrolyse hergestellt (pH 12). Der Feststoffgehalt der wässrigen, alkalischen Lösung kann zwischen 0,1 bis 10 Gew-% variieren, vorzugsweise beträgt der Feststoffgehalt 2 bis 6 Gew.-%, besonders bevorzugt 3 bis 5 Gew.-%.

Ebenfalls bevorzugt verwendet werden können Copolymere von Polyethern, bevorzugt Ethylen-, Propylen- und/oder Butylenoxid, und Styroloxid. Beispiele hierfür finden sich in der Tego® Dispers-Familie 65X, bevorzugt Tego® Dispers 650, Tego® Dispers 651 und Tego® Dispers 655, welche von der Evonik-Goldschmidt GmbH vertrieben werden.

Die Menge an jeweiligem, erfindungsgemäße eingesetztem Dispergier- Additiv kann bevorzugt zwischen 5 Gew.-% und 45 Gew.-%, bezogen auf die Gesamtmenge der Farbmittelpräparation betragen, vorzugsweise beträgt die Konzentration an dem jeweiligen Dispergier-Additiv 10 Gew.-% bis 40 Gew.-% und besonders bevorzugt 20 Gew.-% bis 35 Gew.-%, jeweils bezogen auf die Gesamtmenge der Farbmittelpräparation. Hier ist wiederum anzumerken, dass es sich bei dem Dispergieradditiv um eine verdünnte Lösung handeln kann. Die Angabe in Gewichts-Prozent bezieht sich dann auf die Gesamtmasse der jeweils verdünnten Lösung und nicht auf den Wirksubstanzgehalt.

Nach der erfindungsgemäßen Lehre können organische lösliche Farbstoffe, ausgewählt aus Anthrapyrimidinen, Chinophthalonen, Perinonen oder Monoazofarbstoffen wie beispielsweise Thermoplastrot® 454, Macrolexgelb® G, Sandoplast® Rot G oder Solvaperm® Rot G, eingesetzt werden.

Die Menge an organischen löslichen Farbstoffen kann zwischen 0,5 Gew.-% und 50 Gew.-%, bezogen auf die Gesamtmenge der Farbmittelpräparation, betragen.

Optional können der erfindungsgemäß verwendeten Farbmittelpräparation alle üblichen Hilfsstoffe zugesetzt werden, wie beispielsweise Mittel zur Verhinderung der Fäulnis, der bakteriellen Zersetzung, Fungizide, Verlaufshilfsmittel, Verdicker und Entschäumer. Hier werden beispielsweise der Entschäumer Byk 024 der Fa. Byk Chemie und beispielsweise die Anti-Bakterizide Ebotec MT 15, Acticide MBL oder Acticide IPW50 eingesetzt.

Zur Einstellung der optimalen Viskosität der Farbmittelzusammensetzung wird - sofern eine Verringerung der Viskosität notwendig ist - bevorzugt Wasser, besonders bevorzugt VE-Wasser verwendet.

Bei geringer Konzentration des organischen löslichen Farbstoffs in der Farbmittelpräparation, insbesondere bei Konzentrationen kleiner 10 Gew.-%, kann eine Anpassung der Viskosität notwendig werden, welche bevorzugt durch Zusatz eines oder mehrere Verdicker erfolgt. Die erfindungsgemäß bevorzugten Verdicker sollten weder die Thermostabilität noch die Bewitterungsergebnisse der eingefärbten Formmassen negativ beeinflussen.

Geeignete Verdicker sind Cellulosen, insbesondere Ethylcellulose.

Bevorzugte Verdickungsmittel zur Einstellung der gewünschten Viskosität der Farbmittelpräparation sind carboxylatgruppenhaltige Polymerisate, welche als wasser- bzw. alkalilösliche Festprodukte, als kolloidale Lösungen oder wässrige Dispersionen zur Verfügung stehen, wie beispielsweise Homo- und Copolymerisate auf Basis von Vinylacetat und Crotonsäure oder teilverseifte Poly(meth)acrylate. Besonders bevorzugt sind Homo- und Copolymerisate aus Acryl- und/oder Methacrylsäure in Form ihrer Natriumsalze.

Carboxylgruppenhaltige Polymerisate sind in der reinen Säureform nicht wasserlöslich und müssen in einen für die Koazervation geeigneten Solvatationszustand versetzt werden. Zu diesem Zweck muss ein ausreichender Teil der Carboxylgruppen in Form von Carboxylatgruppen vorliegen. Sie bewirken die Solvatisierung des Polymerisats mit Wasser, so dass es im echt gelösten oder wenigstens im kolloidal gelösten Zustand vorliegt. Echte Lösungen sind weitgehend klar. Kolloidale Lösungen zeichnen sich durch eine mehr oder weniger deutliche Trübung aus. Wenn das Polymer noch nicht neutralisierte Carboxylgruppen enthält, kann eine kolloidale, leicht trübe Lösung durch weitergehende Neutralisation in eine echte Lösung übergeführt werden.

Der erforderliche Solvatationszustand wird durch einen ausreichenden Gehalt an Carboxylatgruppen im Polymer erreicht. Bei hoch carboxylgruppenhaltigen Polymeren genügt manchmal schon eine teilweise Neutralisation der Carboxylgruppen zu Carboxylatgruppen, während bei Copolymeren mit einem niedrigen Carboxylgruppengehalt meistens eine vollständige Neutralisation notwendig ist.

Liegt der Carboxylgruppengehalt zu niedrig, so lässt sich auch bei vollständiger Neutralisation keine ausreichende Solvatisierung erreichen.

Der für eine ausreichende Solvatisierung erforderliche Carboxylatgehalt hängt von der Hydrophilie des gesamten Polymerisats ab. In der Regel liegt er im Bereich von 3 bis 10 Gew.-%, berechnet als COO- und bezogen auf das Gewicht des nicht neutralisierten Polymerisats. Wenn das Polymerisat ganz oder überwiegend aus Einheiten einer äthylenisch ungesättigten, radikalisch polymerisierbaren Carbonsäure aufgebaut ist, ist eine vollständige Neutralisation zwar vorteilhaft, aber nicht unerlässlich. Der pH-Wert der Verdickungsmittel liegt je nach dem Neutralisationsgrad bevorzugt im Bereich von 8 bis 11.

Zur Neutralisation der Carboxyl- zu Carboxylat-Gruppen ist im Prinzip jede Base geeignet, die einwertige Kationen enthält. Wässriges Alkali, insbesondere Natronlauge, ist aus wirtschaftlichen Gründen bevorzugt.

Der Anteil der äthylenisch ungesättigten, radikalisch polymerisierbaren Carbonsäure sollte bevorzugt nicht weniger als 6 und nicht mehr als 80 Gew.-%, vorzugsweise 10 bis 80 Gew.-%, insbesondere 20 bis 80 Gew.-%, bezogen auf das Gesamtgewicht der zur Herstellung der Verdicker verwendeten Monomere, betragen. Acryl- und/oder Methacrylsäure sowie Maleinsäure sind bevorzugt; geeignet sind weiterhin Fumar-, Itakon- oder Crotonsäure.

Als Comonomere können nichtionische, leicht oder schwer wasserlösliche äthylenisch ungesättigte, radikalisch polymerisierbare Monomere am Aufbau des Polymerisats beteiligt sein. Eine vorteilhafte Wirkung haben Ethylen und Alkylester der Acryl- und/oder Methacrylsäure, insbesondere mit 1 bis 4 Kohlenstoffatomen im Alkylrest.

Ihr Anteil beträgt vorzugsweise 20 bis 90 Gew.-%, besonders bevorzugt 20 bis 80 Gew.-% .-%, bezogen auf das Gesamtgewicht der zur Herstellung der Verdicker verwendeten Monomere. Andere verwendbare Comonomere sind z. B. Styrol, Acrylnitril oder Vinylacetat. Stärker hydrophile oder wasserlösliche Comonomere, wie Acryl- und/oder Methacrylamid oder Hydroxyalkylester der Acryl- und/oder Methacrylsäure, können beispielsweise in Anteilen bis insgesamt etwa 30 Gew.-%, vorzugsweise bis 10 Gew.-%, .-%, bezogen auf das Gesamtgewicht der zur Herstellung der Verdicker verwendeten Monomere, mitverwendet werden.

Schliesslich können auch geringe Anteile von vernetzenden Comonomeren mit zwei oder mehr äthylenisch ungesättigten, radikalisch polymerisierbaren Gruppen im Molekül, wie Ethylenglykol-diacrylat und -dimethacrylat, Allylacrylat und -methacrylat, am Aufbau des Polymerisats beteiligt sein. Ihr Anteil muss jedoch niedrig genug sein, um noch eine ausreichende Solvatisierung zu gestatten, beispielsweise bis zu 3, vorzugsweise bis zu 1, insbesondere bis zu 0,1 Gew.-%, .-%, bezogen auf das Gesamtgewicht der zur Herstellung der Verdicker verwendeten Monomere.

Eine befriedigende Wirkung als Verdicker setzt in der Regel ein ausreichendes Molekulargewicht des Polymerisats voraus. Es soll im allgemeinen wenigstens 20 000, vorzugsweise 50 000 bis 2 Millionen betragen, jeweils als Gewichtsmittelwert bestimmt. Bevorzugte carboxylatgruppenenthaltende Verdicker haben in Form einer mit Natronlauge auf pH 9 eingestellten wässrigen Lösung bei einer Konzentration von 200 g/l und 20 °C eine Viskosität von mehr als 100, insbesondere mehr als 1000 mPa s. Diese Viskosität wird von sehr hochmolekularen Verdickern schon bei einer Konzentration von etwa 30 g/l erreicht.

Im Rahmen der vorliegenden Erfindung besonders bevorzugt verwendete Verdicker sind als Rohagit S von der Firma Evonik Röhm GmbH kommerziell erhältlich. Bei Rohigt S handelt es sich um ein Perlpolymerisat auf Basis von Methacrylsäure. Die Säurezahl wird mit 390-440mgKOH/g angegeben. Je nach Molekulargewicht des einzusetzenden Perlpolymerisates ist somit eine hochviskose Verdickerlösung (Rohagit S hV) bzw. eine mittelsviskose Verdickerlösung (Rohagit S mV) herstellbar. Die Viskosität wässriger Lösungen hängt vom Festkörpergehalt, der Temperatur, dem Neutralisationsgrad und von der Art der zur Neutralisation verwendeten Base ab. Die Viskosität einer 3%igen Rohagit S-Lösung als Natriumsalz bei 20°C beträgt zum Beispiel für Rohagit S mV 3800-5500 mPas (Brookfield-Viskosimeter, LVT), für Rohagit S hV 7700-11000 mPas. Als Mindestkonzentration wird eine 3%ige Lösung von Rohagit S empfohlen.

Der Zusatz eines oder mehrere Verdicker kann vor der eigentlichen Dispergierung des organischen löslichen Farbstoffs und des Dispergieradditivs mit Hilfe von Scherung oder aber auch nach der Dispergierung des organischen löslichen Farbstoffs und des Dispergieradditivs erfolgen.

Die Einfärbung der thermoplastischen Kunststoffformmasse kann entweder direkt durch Zugabe der Farbmittelpräparation zu einer ungefärbten Kunststoffformmasse erfolgen oder über einen Masterbatch.

Unter einem Masterbatch versteht man eine Formulierung aus der Farbmittelpräparation und einer Kunststoffformmasse, wobei die Konzentration der Farbmittelpräparation im Masterbatch so eingestellt wird, daß beim Einsatz des Masterbatches zum Einfärben von ungefärbten Kunststoffformmassen der gewünschte Farbeindruck entsteht.

Erfindungsgemäß werden thermoplastische Kunststoffe eingefärbt. Als thermoplastische Kunststoffformmasse wird beispielsweise eine Poly(alkyl)(meth)acrylat-Formmasse, bevorzugt eine Polymethyl(meth)acrylat-Formmasse oder eine Polycarbonat-Formmasse eingesetzt.

Unter Poly(alkyl)(meth)acrylat-Formmassen werden im Folgenden Kunststoffformmassen aus polymerisiertem (Alkyl)methacrylat oder aus polymerisiertem (Alkyl)acrylat sowie aus Mischungen der beiden Monomertypen verstanden.

Poly(alkyl)(meth)acrylate werden im Allgemeinen durch radikalische Polymerisation von Mischungen erhalten, die Alkyl(meth)acrylate, bevorzugt Methyl(meth)acrylat, enthalten. Im Allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Alkyl(meth)acrylat.

Handelt es sich um Polymethyl(meth)acrylate, so können Mischungen zur Herstellung derselben weitere (Meth)acrylate enthalten, die mit Methylmethacrylat copolymerisierbar sind. Der Ausdruck (Meth)acrylate umfasst Methacrylate und Acrylate sowie Mischungen aus beiden. Diese Monomere sind weithin bekannt. Zu den (Alkyl)(meth)acrylaten bzw. kurz (Meth)acrylaten gehören bevorzugt solche, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl) (meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat. Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.
Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. α-Methylstyrol und α -Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.
Im Allgemeinen werden diese Comonomere in einer Menge von 0 Gew.-% bis 60 Gew.-%, vorzugsweise 0 Gew.-% bis 40 Gew.-% und besonders bevorzugt 0 Gew.-% bis 20 Gew.-%, bezogen auf das Gewicht der Monomeren, eingesetzt, wobei die Verbindungen einzeln oder als Mischung verwendet werden können.
Die Polymerisation wird im Allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.
Diese Verbindungen werden häufig in einer Menge von 0,01 Gew.-% bis 10 Gew.-%, vorzugsweise von 0,5 Gew.-% bis 3 Gew.-%, bezogen auf das Gewicht der Monomeren, eingesetzt. Hierbei können verschiedene Poly(meth)acrylate eingesetzt werden, die sich beispielsweise im Molekulargewicht oder in der Monomerzusammensetzung unterscheiden.

Erfindungsgemäß können auch schlagzähmodifizierte Poly(meth)acrylat-Kunststoffe eingefärbt werden.

Der schlagzähmodifizierte Poly(meth)acrylat-Kunststoff besteht in einer ersten bevorzugten Ausführungsform aus 20 bis 80, bevorzugt 30 bis 70 Gew.-% einer Poly(meth)acrylat-Matrix und 80 bis 20, bevorzugt 70 bis 30 Gew.-% Elastomerteilchen mit einem mittleren Teilchendurchmesser von 10 bis 150 nm (Messungen z. B. mit der Ultrazentrifugenmethode).

In einer zweiten bevorzugten Ausführungsform sind in der der Polymethacrylat-Matrix 1 Gew.-% bis 30 Gew.-%, bevorzugt 2 Gew.-% bis 20 Gew.-%, besonders bevorzugt 3 Gew.-% bis 15 Gew.-%, insbesondere 5 Gew.-% bis 12 Gew.-% eines Schlagzähmodifizierungsmittels, das eine Elastomerphase aus vernetzten Polymerisatteilchen umfasst, enthalten.

Der schlagzähmodifizierte Poly(meth)acrylat-Kunststoff (szPMMA) besteht aus einem Anteil Matrixpolymer, und einem in der Matrix verteilten Anteil an Schlagzähmodifizierungsmitteln auf Basis von vernetzten Poly(meth)acrylaten.

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten oder Spritzgußteilen weiterverarbeitet werden.

Das Matrixpolymer besteht insbesondere aus 80 Gew.-% bis 100 Gew.-%, vorzugsweise zu 90 Gew.-% - 99,5 Gew.-%, aus radikalisch polymerisierten Methylmethacrylat-Einheiten und gegebenenfalls zu 0 Gew.-% - 20 Gew.-%, bevorzugt zu 0,5 Gew.-% - 10 Gew.-% aus weiteren radikalisch polymerisierbaren Comonomeren, z. B. C₁- bis C₄-Alkyl(meth)acrylaten, insbesondere Methylacrylat, Ethylacrylat oder Butylacrylat. Vorzugsweise liegt das mittlere Molekulargewicht M_{w} (Gewichtsmittel) der Matrix im Bereich von 90.000 g/mol bis 200.000 g/mol, insbesondere 100.000 g/mol bis 150.000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 90 Gew.-% bis 99,5 Gew.-% Methylmethacrylat und 0,5 Gew.-% bis 10 Gew.-% Methylacrylat. Die Vicaterweichungstemperaturen VET (ISO 306-B50) können im Bereich von mindestens 90, bevorzugt von 95 bis 112 °C liegen.

Mischungen (Blends) von thermoplastischen Kunststoffen, insbesondere von PMMA mit weiteren, mit PMMA verträglichen Kunststoffen, können ebenfalls verwendet werden. Als mit PMMA verträgliche Kunststoffen kommen beispielsweise ABS-Kunststoffe oder SAN - Kunststoffe in Betracht.

Die PMMA-Kunststoffformmassen werden unter der Marke PLEXIGLAS® von der Evonik Röhm GmbH in den Handel gebracht.

Die Polymethacrylat-Matrix enthält ein Schlagzähmodifizierungsmittel, welches z. B. ein zwei- oder dreischalig aufgebautes Schlagzähmodifizierungsmittel sein kann.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben. Bevorzugte Herstellungsverfahren für Schlagzähmodifizierungsmittel sind Perlpolymerisation oder Emulsionspolymerisation.

Im einfachsten Fall handelt es sich um, mittels Perlpolymerisation erhältliche, vernetzte Teilchen mit einer mittleren Teilchengröße im Bereich von 10 bis 150 nm, bevorzugt 20 bis 100, insbesondere 30 bis 90 nm. Diese bestehen in der Regel aus mindestens 40 Gew.-%, bevorzugt 50 Gew.-% - 70 Gew.-% Methylmethacrylat, 20 Gew.-% bis 40 Gew.-%, bevorzugt 25 Gew.-% bis 35 Gew.-% Butylacrylat sowie 0,1 Gew.-% bis 2 Gew.-%, bevorzugt 0,5 Gew.-% bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 Gew.-% bis 10 Gew.-%, bevorzugt 0,5 Gew.-% bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kern-Schale-Aufbau aufweisen können und durch Emulsionspolymerisation erhalten werden (s. z. B. EP-A 0 113 924, EP-A 0 522 351, EP-A 0 465 049 und EP-A 0 683 028). Geeignete Teilchengrößen dieser Emulsionspolymerisate müssen jedoch für die Zwecke der Erfindung im Bereich von 10 - 150, bevorzugt 20 bis 120 nm, besonders bevorzugt 50 - 100 nm.

Ein dreischichtiger bzw. dreiphasiger Aufbau mit einem Kern und zwei Schalen kann wie folgt beschaffen sein. Eine innerste (harte) Schale kann z. B im Wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 Gew.-% bis 40 Gew.-%, besonders bevorzugt im Bereich von 25 Gew.-% bis 35 Gew.-%.

In einer bevorzugten Alternative mit einem zwischichtigen Aufbau weisen die in der Poly(meth)acrylat-Matrix verteilten Elastomerteilchen einen Kern mit einer weichen Elastomerphase und einer daran gebundenen Hartphase auf.

Bevorzugt, insbesondere zur Folienherstellung, jedoch nicht auf diese beschränkt, wird ein, im Prinzip aus EP 0 528 196 A1 bekanntes System verwendet, das ein zweiphasiges, schlagzähmodifiziertes Polymerisat ist aus:
a1) 10 Gew.-% bis 95 Gew.-% einer zusammenhängenden Hartphase mit einer Glasübergangstemperatur *T*_{mg} über 70 °C, aufgebaut aus
a11) 80 Gew.-% bis 100 Gew.-% (bezogen auf a1) Methylmethacrylat und
a12) 0 Gew.-% bis 20 Gew.-% eines oder mehrerer weiterer ethylenisch ungesättigter, radikalisch polymerisierbarer Monomeren, und
a2) 90 Gew.-% bis 5 Gew.-% einer in der Hartphase vorteilten Zähphase mit einer Glasübergangstemperatur *T*_{mg} unter -10 °C, aufgebaut aus
a21) 50 Gew.-% bis 99,5 Gew.-% eines C₁-C₁₀-Alkylacrylats (bezogen auf a2)
a22) 0,5 Gew.-% bis 5 Gew.-% eines vernetzenden Monomeren mit zwei oder mehr ethylenisch ungesättigten, radikalisch polymerisierbaren Resten, und
a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50, vorzugsweise zu mehr als 80 Gew.-%, aus niederen Alkylacrylaten aufgebaut ist, woraus sich eine Glasübergangstemperatur *T*_{mg} dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Desweiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse A führen.

Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit U₈₀ der Teilchengröße unter 0,5, (U₈₀ wird aus einer integralen Betrachtung der Teilchengrößenverteilung, die per Ultrazentrifuge bestimmt wird, ermittelt. Es gilt: U₈₀ = [(r₉₀ - r₁₀) / r₅₀] - 1, wobei r₁₀, r₅₀, r₉₀ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 Gew.-% bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 Gew.-% bis 0,05 Gew.-% organischem Hydroperoxid und 0,05 Gew.-% bis 0,15 Gew.-% Natriumhydroxymethylsulfinat , bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

In einer bevorzugten Ausführungsform enthält die Hartphase niedermolekulare und/oder einpolymerisierte UV-Absorber in Mengen von 0,1 Gew.-% bis 10 Gew.-%, bevorzugt 0,5 Gew.-%-5 Gew.-%, bezogen auf A als Bestandteil der comonomeren Komponenten a12) in der Hartphase. Beispielhaft für die polymerisierbaren UV-Absorber, wie sie u.a. in der US 4 576 870 beschrieben sind, seien 2-(2'-Hydroxyphenyl)-5-methacrylamidobenzotriazol oder 2-Hydroxy-4-methacryloxybenzophenon genannt. Niedermolekulare UV-Absorber können beispielsweise Derivate des 2-Hydroxybenzophenons oder des 2-Hydroxyphenylbenzotriazols oder Salicylsäurephenylester sein. Im allgemeinen weisen die niedermolekularen UV-Absorber ein Molekulargewicht von weniger als 2 x 10³ (g/mol) auf. Besonders bevorzugt sind UV-Absorber mit geringer Flüchtigkeit bei der Verarbeitungstemperatur und homogener Mischbarkeit mit der Hartphase a1) des Polymerisats A.

Die Farbmittelpräparationen können erfindungsgemäß zur Einfärbung der weiter oben genannten thermoplastischen Kunststoffe verwendet werden. Es können aber auch Mischungen (Blends) von thermoplastischen Kunststoffen, insbesondere von PMMA mit weiteren, mit PMMA verträglichen Kunststoffen, eingefärbt werden verwendet werden. Als mit PMMA verträgliche Kunststoffen kommen beispielsweise ABS-Kunststoffe oder SAN - Kunststoffe in Betracht.

Die PMMA-Kunststoffformmassen werden unter der Marke PLEXIGLAS® von der Evonik Röhm GmbH in den Handel gebracht.

Weiterhin können bevorzugt Polycarbonate erfindungsgemäß eingefärbt werden. Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern durch Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

### Meßmethoden

### Bestimmung der TGA der wasserfreien Dispergieradditive

Die isotherme thermogravimetrische Untersuchung erfolgt mittels einer Thermowaage Auto TGA 2950 V 5.4A der Firma TA Instruments mit einer Heizrate von 5K/min bis 260°C und anschließender 60 min isothermer Analyse bei 260°C. Die Proben werden vor der Messung nicht konditioniert jedoch wie folgt getrocknet:
Die wasserbasierten Dispergieradditive werden bis zur Massenkonstanz in einem Trockenofen getrocknet, bevor eine Messung durch TGA erfolgte.

Im Falle von Perlpolymerisaten als Dispergierhilfsmittel wird die TGA am festen Perlpolymerisat durchgeführt. D.h. bei wäßriger, alkalischer Lösung des Perlpolymerisates wird das zur Herstellung dieser Lösung verwendete feste Perlpolymerisat analysiert.

### Bestimmung des Gelbwertes und der Transmission

Es wurden durch Spritzguss Prüfkörper mit den Maßen 60 mm x 45 mm x 3 mm hergestellt, an denen die Transmission (T) gemäß DIN 5036 und der Gelbwert (G) gemäß DIN 6167 mit einem Messgerät Lambda 19 der Firma Perkin Elmer bestimmt wurde.

Aus den jeweiligen eingefärbten Formmassen wurden Probekörper hergestellt bzw. Untersuchungen am Granulat durchgeführt. Die Probekörper wurden auf einer Arburg 221 bzw. auf einer Battenfeld CD spritzgegossen.

### Bestimmung des Zug-Moduls

Der E-Modul wurde nach ISO 527 ermittelt.

### Bestimmung der Vicat-Erweichungstemperatur:

Die Bestimmung der Vicaterweichungstemperatur VET erfolgte nach ISO 306-B50.

### Bestimmung des Schmelzindex MVR:

Die Bestimmung des Schmelzindexes MVR erfolgte nach ISO 1133, 230°C/3,8 kg.

### Untersuchung der Bewitterbarkeit durch Xenotest:

Das Bewitterungsverhalten wurde anhand von Gelbwert- und Transmissionsänderungen sowie visueller Beurteilung nach 1500h bzw. 7500h Xenotest beurteilt. Die Gerätebezeichnung lautet Xenotest 1200 (45 W/m²).

Die nachfolgenden Beispiele dienen zur näheren Erläuterung und zum besseren Verständnis der vorliegenden Erfindung, schränken diese aber in keiner Weise ein.

### Beispiele

In den nachfolgenden Beispielen werden die Dispergier-Additive A) Tego® Dispers 755W und B)Perl- Copolymer der Methacrylsäure mit hydrophobem Methacrylat und im Vergleichsbeispiel EFKA 4550 verwendet. Die Dispergier-Additive weisen in getrocknetem Zustand folgende Masseverluste bei isothermer thermogravimetrischer Analyse für 60 min bei 260°C auf:

| | |
|---|---|
| Beispiel A: | Tego® Dispers 755W = 1,3 Gew.-% |
| Beispiel B: | Copolymeren der Methacrylsäure mit hydrophobem Methacrylat = 2,9 Gew.-% |
| Vergleichsbeispiel V: | EFKA 4550 = 25,5 Gew.-%. |

### I) Herstellung des Copolymeren aus Beispiel B:

In einem Polymerisationskessel mit Warmwasserumlauf, Rührwerk und Stickstoffeinleitung wird eine Wasserphase bestehend aus:

| | |
|---|---|
| • 750 kg | VE - Wasser |
| • 13,5 kg | Mowiol 10 % ig in VE-Wasser |
| • 225 g | 2-Mercaptoethanol welches mit 500 g VE-Wasser verdünnt wird |
| • 112 g | Trilon A (40 Gew.-%ige Lösung von Tri-Natriumnitrilotriacetat in Wasser, Fa. BASF), die noch mit 500 g Wasser weiter verdünnt wird |
| • 3890 g | Dibenzolperoxid, 75 Gew.-%ig in Wasser welches in 25 kg VE-Wasser aufgeschlämmt wird |

vorgelegt.

In diese Vorlage wird eine Monomerenmischung aus

| | |
|---|---|
| • 169 kg | Methacrylsäure |
| • 56,25 kg | 2-Ethylhexylmethacrylat |

gepumpt. Anschließend werden 100 kg VE - Wasser zugegeben. Die Solltemperatur der Warmwasserumlaufheizung wird auf 80° C eingestellt. Nach beendeter Reaktion wird der Ansatz noch 1 Stunde bei 80° C gehalten, dann auf 35° C gekühlt, mit 450 kg VE - Wasser verdünnt und anschließend über ein Vibra-Sieb (90 µm) gesiebt.

250 kg des erhaltenen Produkts werden in einem Polymerisationskessel mit Warmwasserumlauf und Rührwerk mit 1500 kg VE-Wasser vermischt und auf 60 °C erhitzt. Innerhalb von 60 min wird zu dieser Vorlage eine Mischung aus

| | |
|---|---|
| • 1100 kg | VE - Wasser |
| • 75 kg | Natronlauge 50 % ig |

Und danach 100 kg VE-Wasser zugegeben. Anschließend wird der Ansatz 4 Stunden bei 60° C gerührt, dann auf 30° C gekühlt und der pH -Wert mit 50 % iger Natronlauge auf 11,5 bis 12,5 eingestellt. Der Trockengehalt des so erhaltenen Dispergieradditivs liegt bei 3,5 bis 4 Gew.-%.

Um die Auswirkungen der Dispergieradditive auf den Gelbwert einer Polymermischung zu testen, werden nachfolgend zunächst nicht eingefärbte thermoplastische Kunststoffformmassen hergestellt und einer Temperaturstabilitätsprüfung unterzogen.

### II) Thermostabilitätsprüfung der Dispergieradditive

Die bessere Thermostabilität der Dispergier-Additive A) Tego® Dispers 755W und B)Perlpolymerisat-Dispergieradditiv im Vergleich zu EFKA 4550 wurde anhand des Gelbwertes nach verschiedenartiger Temperaturbelastung, Scherung und Dauer der Temperaturbelastung beurteilt und belegt. Dabei wurden zwei Verfahren zur Temperaturbelastung vergleichen:
Verfahren I: Einkompoundieren, thermische Belastung Spritzguß T = 290°C
Verfahren II: Thermische Belastung durch Brabender-Kneten bei T = 260°C unter Variation der Dauer der thermischen Belastung und der Konzentration an Dispergier-Additiv

### II.1) Verfahren I: Einkompoundieren, thermische Belastung Spritzguß T = 290°C

Die einzelnen Dispergieradditive Tego® Dispers 755W (erfindungsgemäße Beispiele A1 und A2) und EFKA 4550 (als Vergleichsbeispiel V2) wurden in den beiden Konzentrationen 0,01 Gew.% und 0,1 Gew.% jeweils bezogen auf PLEXIGLAS® 8N-Granulat bzw. im Falle des Perlpolymerisat-Dispergieradditivs (ca. 4 Gew.-%ige, wässrige Lösung, erfindungsgemäße Beispiele B1 und B2) 0,25 und 1,5 Gew.-%, bei 240°C einkompoundiert und anschließend das Compound/ Granulat bei 290°C spritzgegossen. Aus den Spritzlingen wurden Fließpressplättchen der Dicke 3 mm bei 210 °C hergestellt. Zum Vergleich wurde parallel PLEXIGLAS® 8N-Granulat ohne Dispergieradditiv verarbeitet und thermisch belastet (Vergleichsbeispiel V1). Die anschließend hergestellten Fließpressplatten werden visuell nach Verfärbung, Belags- und Pickelbildung beurteilt, und es wird der Gelbwert vermessen. Als Referenzmaterial hinsichtlich Gelbwert, Farbe und Pickelbildung dient PLEXIGLAS 8N.

**Tabelle 1: Temperaturstabilitätsprüfungen an Dispergier-Additiven in Plexiglas Formmasse 8N ohne Farbmittel**

| Beispiel | Dispergier-Additiv | Gehalt [%] | Vis. Beurteilung der Fließpressplatte | Gelbwert |
|---|---|---|---|---|
| A1 | Tego® Dispers 755W | 0,01 | Klar, keine Verfärbung, pickelfrei | 0,6 |
| A2 | Tego® Dispers 755W | 0,1 | Klar, keine Verfärbung, pickelfrei | 0,9 |
| B1 | Perlpolymerisat-Dispergierad. | 0,25 | Leicht trüb, keine Verfärbung, kleine Pickel | 0,5 |
| B2 | Perlpolymerisat-Dispergierad. | 1,5 | Leicht trüb, keine Verfärbung, kleine Pickel | 0,4 |
| V1 | - | - | Klar | 0,6 |
| V2 | EFKA 4550 | 0,1 | Verfärbung | 4,1 |

Bei einem Vergleich der ermittelten Gelbwerte von Vergleichsbeispiel V1 als Nullvergleich mit den Beispielen A2, B2 und dem Vergleichsbeispiel V2 wird deutlich, dass bei Vergleichsbeispiel V2 die größte Gelbwertzunahme vorliegt: +3,5 bezogen auf den Nullwert von V1 = 0.6.

### II.2) Verfahren II: Thermische Belastung durch Brabender-Kneten T = 260°C unter Variation der Dauer der thermischen Belastung

Um die thermische Belastung unter Scherung zu simulieren, wurden Brabender Knet-Versuche mit Argon-Überströmung bei 260°C durchgeführt. Bei dem Brabender-Kneter handelt es sich um einen Meßkneter Rheodrive 5000 der Fa. HAAKE mit einem Knetaufsatz Rheomix 600.

Die Basis-Formmasse PLEXIGLAS® 8N wurde vorgelegt (50g) und die entsprechende, in der Tabelle 2 angegebene Menge an Dispergieradditiv in die heiße Schmelze zudosiert (0,019 Gew.-% bzw. 0,19 Gew.-%). Neben einer Knetzeit von 10 min wurde auch 30 min geknetet, um die Dauer der thermischen Belastung zu variieren. Es wurde die Transmission und der Gelbwert an Fließpressplatten bestimmt (Temperatur bei der Herstellung der Fließpressplatten 210°C).

**Tabelle 2: Übersicht der Brabender-Knetversuche bei T = 260°C, Knetzeit 10min**

| | Beispiel A3 | Beispiel A4 | Beispiel B3 | Beispiel B4 | Vergleichsbeispiel V3 | Vergleichsbeispiel V4 | Vergleichsbeispiel V5 |
|---|---|---|---|---|---|---|---|
| | Tego® Dispers 755W | Tego® Dispers 755W | Perlpolymerisat-Disp.ad. | Perlpolymerisat-Disp.ad. | EFKA 4550 | EFKA 4550 | Wasser |
| | 0,019 Gew.- % | 0,19 Gew.- % | 0,019 Gew.- % | 0,19 Gew.- % | 0,019 Gew.- % | 0,19 Gew.- % | 0,019 Gew.- % |
| Visuelle Beurteilung | Transparent | Transparent | Transparent | leicht gelblich | Leicht gelblich | gelb | Transparent |
| T [%] | 90,6 | 90,8 | 91,2 | 88,2 | 87,2 | 82,5 | 91,2 |
| Gelbwert | 1,66 | 2,45 | 1,27 | 2,51 | 6,7 | 22,4 | 1,16 |

Der Gelbwert des Fließpressplättchens (FPP) von Beispiel A3 ist nur geringfügig höher als der Gelbwert des FPPs von V5 (Vergleichsversuch nur unter Zusatz der entsprechenden Menge an Wasser, Gelbwert 1,16): Zunahme +0,5.

Der Gelbwert des FPP von Beispiel B3 beträgt lediglich 1,27 nach einer Belastungszeit von 10 min bei 260 °C. Zum Vergleich wurde das EFKA 4550 untersucht: hier beträgt der Gelbwert 6,7 (V3) und die Transmission lediglich noch 87,2 %. Betrachtet man größere Einsatzmengen an Dispergieradditiv wird der Einfluß der Thermoinstabilität des Dispergieradditives EFKA 4550 besonders deutlich: so erreicht das FPP von Vergleichsbeispiel V4 einen Gelbwert von 22,4. Die Gelbwerte der FPP der Beispiele A4 und B4 im Vergleich sind nur 2,45 bzw. 2,51.

**Tabelle 3: Übersicht der Brabender-Knetversuche bei T = 260°C, Knetzeit 30 min**

| | Beispiel A5 | Beispiel A6 | Beispiel B5 | Beispiel B6 | Vergleichsbeispiel V6 | Vergleichsbeispiel V7 |
|---|---|---|---|---|---|---|
| | Tego® Dispers 755W 0,019 Gew.-% | Tego® Dispers 755W 0,19 Gew.-% | Perlpolymerisat-Disp.add. 0,019 Gew.-% | Perlpolymerisat-Disp.ad. 0,19 Gew.-% | EFKA 4550 0,019 Gew.-% | EFKA 4550 0,19 Gew.-% |
| Visuelle Beurteilung | Transparent | Transparent | Transparent | leicht gelblich | leicht gelblich | gelb |
| T [%] | 87,3 | 88,1 | 89,0 | 88,4 | 87,3 | 72,3 |
| Gelbwert | 5,5 | 7,1 | 4,4 | 5,2 | 8,7 | 42,8 |

Wird die Zeitdauer der thermischen Belastung von 10min auf 30min erhöht, so steigen nun ebenfalls die Gelbwerte der Beispiele A5 und B5 an (5,5 bzw. 4,4). Bei der zehnfachen Konzentration werden nun Gelbwerte von 7,1 (Beispiel A6) und 5,2 (Beispiel B6) erreicht. Vergleichsweise sehr viel stärker steigt der Gelbwert von Vergleichsbeispiel V7 (42,8).

### III) Test der Verarbeitbakeit der Farbmittelpräparationen (auf Belagsbildung)

### III.1) Herstellung der Flüssigfarbe:

Das jeweilige Dispergiermittel (20 Gewichtsteile), das VE-Wasser(40 Gewichtsteile), und die beiden Additive (Byk 024, 0,6 Gewichtsteile und Ebotec MT15, 0,07 Gewichtsteile) werden in eine Glasflasche (125 ml) eingewogen. Mit Hilfe eines Dissolvers (Dispermat) wird portionsweise der organische lösliche Farbstoff (Farbmittel 1 : Farbmittel 2 = 3,8 : 1) in die Flüssigkeit bei 500-1000 Upm eingerührt (ca. 20min). Nach dem Einrührvorgang wird die Glasflasche mit je 60 g Tonkugeln
beschickt, auslaufsicher verschlossen und etwa 20 h auf der Rollbank dispergiert. Um die Güte der Dispergierung zu beurteilen, wurde im Anschluss die Partikel-Größe mit einem Grindometer beurteilt.

**Tabelle 4: Übersicht der hergestellten Flüssigfarben**

| | Beispiel C1 | Beispiel C2 | Vergleichsbeispiel V8 |
|---|---|---|---|
| Tego® Dispers 755W | 20 | - | - |
| Perlpolymerisat-Disp.ad. | - | 20 | - |
| EFKA 4550 | - | - | 20 |
| VE-Wasser | 40 | 40 | 40 |
| Farbmittel 1 | 31,3 | 31,3 | 31,3 |
| Farbmittel 2 | 8,1 | 8,1 | 8,1 |
| Ebotec MT15 | 0,07 | 0,07 | 0,07 |
| Byk 024 | 0,6 | 0,6 | 0,6 |
| Grindometer | 5-50 | 5-50 | 5-50 |

### III.2) Einfärbung

Aus Kunststoffgranulat und Farbmittelpräparation wurde im Taumelmischer eine Mischung hergestellt, die mittels eines Trichters in der Einzugszone eines Einschneckenextruders eindosiert wurde. Die Entgasungszonen waren an einer Vakuumpumpe angeschlossen. Dem Extruder war ein Granulator nachgeschaltet.

Jeweils 0,057 Gew.-% der wie oben beschrieben hergestellten Flüssigfarben C1, C2, und V8 wurden auf Formmasse Granulat Plexiglas 8N aufgetrommelt. Die Mischung wurde bei 240 °C auf einem Einschneckenextruder zweimal compoundiert und hinsichtlich der Verarbeitbarkkeit getestet durch Spritzguß (100 Stück bei geschlossenem Zylinder):

**Tabelle 5: Verarbeitbarkeit der Flüssigfarben**

| | Verteiler | Verarbeitbarkeit | Vicat-Temperatur |
|---|---|---|---|
| Beispiel C1 | Tego® Dispers 755W | Keine Belagsbildung, keine Schlieren | 107,9°C |
| Beispiel C2 | Perlpolymerisat-Dispergieradditiv | Keine Belagsbildung, keine Schlieren | 109,9°C |
| Vergleichsbeispiel V8 | EFKA 4550 | Keine Belagsbildung, keine Schlieren | 109,15°C |

Die Ergebnisse zeigen, daß sich beim Spritzguß der mit der erfindungsgemäßen Farbmittelpräparation eingefärbten thermoplastischen Kunststoffformmasse keine Beläge an den Spritzgußformen bilden. Im Vergleich zu nicht eingefärbter PLEXIGLAS® Formmasse 8N erhöht sich nach Zugabe der jeweiligen Dispergier-Additive die Vicat-Erweichungstemperatur von 106°C auf 109,15°C bzw. 109,9°C bzw. 107,9°C (siehe Tabelle 5).

### IV) Einfärbung mit Farbmittelpräparationen umfassend organische Bindemittel (als Vergleichsbeispiel V9)

Für eine Einfärbung mit organischem Bindemittel (Fettsäureester) aus Kunststoffgranulat und Farbmittelpräparation wurde im Taumelmischer eine Mischung hergestellt, die mittels eines Trichters in der Einzugszone eines Einschneckenextruders eindosiert wurde. Die Entgasungszonen waren an einer Vakuumpumpe angeschlossen. Dem Extruder war ein Granulator nachgeschaltet. Aus dem so gewonnenen Granulat wurde in einem zweiten Verarbeitungsschritt Probekörper für die Vicat - Erweichungstemperaturbestimmung spritzgegossen.

### Zusammensetzung:

- Farbmittel:
   ∘ 0,06 Gew.-% Thermoplastrot® 454
   ∘ 0,016 Gew.-% Macrolexgelb® G
- 0,3 Gew.-% Octadecensäure, zu ca. 70mol% als Oligoethylenglykolmono- und Diester vorliegend, restl. 30% mit Zucker/Zuckeralkoholen verestert
- 99,62 Gew.-% PLEXIGLAS® Formmasse 8N

### Spritzguß auf einer Battenfeld BA 350CD:

Einspritzzeit: 1,76 sec
Massetemp.: 250 °C
Zylindertemp.: 250 bis 230°C
Werkzeugtemp.: 68 °C
   Umschalten von Einspritzen auf Nachdruck bei 560 bar Forminnendruck
Gesamtzykluszeit: 50 sec
   Spritzguss mit offenem Entgasungszylinder

Nach 30 Schuß starker Formbelag und rote Farbablagerung Vicat - Erweichungstemperatur: 106°C

### Zum Vergleich:

Vicat-Erweichungstemperatur der PLEXIGLAS® Formmasse 8N mit 0,06 Gew.-% Thermoplastrot® 454 und 0,016 Gew.-% Macrolexgelb® G ohne C18-Fettsäure: 107°C

### V) Vergleich der Eigenschaften der Produkte hergestellt über kontinuierlichen Einfärbeprozeß

Einfärbungen basierend auf dem Dispergier-Additiv EFKA 4550 erwiesen sich bzgl. des Farbortes oftmals als zu gelb, d.h. der Farbort lag deutlich oberhalb der Ellipse, die ansonsten unter Verwendung des Farbmittelverhältnisses, welches für die Standard-Kompoundierung eingesetzt wird, eingehalten werden kann.

Der diesbezügliche Vorteil der Verwendung des DispergierAdditivs A) Tego® Dispers 755 W wird durch den nachfolgenden Versuch analog dem Beispiel 1 aus dem Anmeldetext der DE102009045122.6 belegt. Es wurde in einer Anlage gemäß Figur 1 sowie der Beschreibung der DE102009045122.6 gearbeitet. Als Injektionsventil wurde ein Einspritzventil mit Faltenbalg Typ 230 DN2, PN der Fa. Phönix eingesetzt. Der Druck innerhalb des Extruders bei der Einspeisungsstelle entsprach in etwa dem Atmosphärendruck, wobei die Temperatur ca. 260°C betrug. An der Einleitungsstelle wurden 750 kg pro Stunde Formmasse durchgeleitet. Als wasserhaltige Flüssigfarben wurden folgende Zusammensetzungen verwendet:

**Tabelle 6: Zusammensetzungen der Flüssigfarben der Betriebsversuche, wobei D1 einen Farbmittelgehalt von 20 Gew.-%, D2 einen Farbmittelgehalt von 33 Gew.-% und V10 einen Farbmittelgehalt von 40 Gew.-% aufweist.**

| Flüssigfarbe | Beispiel D1 [Gew-%] | Beispiel D2 [Gew-%] | Vergleichsbeispiel V10 [Gew-%] |
|---|---|---|---|
| Dispergier-Additiv Tego® Dispers 755W | 20 | 30 | - |
| Dispergier-Additiv EFKA 4550 | - | - | 20 |
| VE-Wasser | 59,33 | 36,33 | 39,33 |
| Thermoplastrot 454 | 15,87 | 24,41 | 31,74 |
| Macrolexgelb G | 4,13 | 8,59 | 8,26 |
| Byk 024 (Entschäumer) | 0,6 | 0,6 | 0,6 |
| Ebotec MT 15 (Anti-Bakterizid) | 0,07 | 0,07 | 0,07 |

Die Steuerung der Zuführung der jeweils notwendigen Menge an Flüssigfarbe D1 bzw. D2 und V10 zu Herstellung der gewünschten eingefärbten Formmasse erfolgte mit der in Figur 1 der DE102009045122.6 dargelegten Anordnung.

Die eingefärbte Formmasse zeigte eine hervorragende Farbverteilung, die innerhalb sehr enger Farbspezifikationen blieb.

Zur Beschreibung der Farbe wurde das Normvalenz-System (DIN 5033, Teil 3) mit x-, y- Koordinaten und Lichttransmission verwendet, wobei die Bestimmung dieser Werte nach DIN 5033, Teil 4 und 7 erfolgte.

Übliche Spezifikationen der eingefärbten Formmasse sehen eine X-Koordinate im Bereich von 0,6495 bis 0,6565, eine Y-Koordinate im Bereich von 0,3335 bis 0,3360 und eine Transmission im Bereich von 30,8 bis 32,8 % vor. Über die gesamte Versuchsdauer von ca. 3 h wurden in konstanten Zeitabständen je drei Proben der Betriebsversuche mit D1 und D2 genommen. Beim Betriebsversuch mit V10 wurden 5 Proben innerhalb von 3h Versuchsdauer genommen.

**Tabelle 7: Übersicht der Ergebnisse der Betriebsversuche bezogen auf X- und Y-Koordinate bzw. Transmission im Vergleich zur üblichen Produkt-Spezifikation dieser Werte**

| | D1 | D2 | V10 |
|---|---|---|---|
| Max. Wert der XKoordinate | ca. 0,6555 | ca. 0,6530 | 0,6612 |
| Min. Wert der XKoordinate | ca. 0,654 | ca. 0,6505 | 0,6553 |
| Max. Wert der YKoordinate | ca. 0,3353 | ca. 0,336 | 0,3361 |
| Min. Wert der YKoordinate | ca. 0,3346 | ca. 0,3358 | 0,3333 |
| Max. Wert der Transmission [%] | 32,4 | 32,5 | 31,7 |
| Min. Wert der Transmission [%] | 31,9 | 32,2 | 30,5 |

Während durch Verwendung von V10 Werte außerhalb des Produkt-Spezifikations-Bereichs erreicht wurden, liegen die Werte unter Verwendung von D1 bzw. D2 innerhalb des Produkt-Spezifikationsbereichs.

### VI) Bewitterung an Formmasse

### VI.1) Nicht eingefärbte Formmasse enthaltend das Dispergier-Additiv Tego® Dispers 755W zum Test des reinen Dispergieradditivs

Vorteilhafterweise wirkt sich der Zusatz des Dispergier-Additivs Tego® Dispers 755W nicht negativ auf das Bewitterungsverhalten aus. Nach 5000h und 7500h Xenotest (Probendicke 3mm, Lichtart D65/10°) wurde Plexiglas 8N enthaltend 0,1 Gew-% Tego® Dispers 755W mit glasklarem Plexiglas 8N bezüglich Veränderung der Transmission und des Gelbwertes verglichen. Zudem wurden die Proben visuell beurteilt. Die verwendete Menge an Tego-Dispers ist im Vergleich zu den sonst üblichen Flüssigfarb-Zusammensetzungen deutlich erhöht, um den möglichen Einfluß des Dispergier-Additives auf das Bewitterungungsverhalten identifizieren zu können.

**Tabelle 8: Xenotest Ergebnisse nach 5000 h Xenotest Bewitterung**

| Probe | Δ Transmission | Δ Gelbwert | Visuelle Beurteilung |
|---|---|---|---|
| Plexiglas 8N | -0,63 | +0,47 (von 0,35 auf 0,82) | Leicht nachgedunktelt, leichter Gelbstich |
| Plexiglas 8N + 0,1 Gew.- % Tego® Dispers 755W | -0,26 | +0,36 (von 0,56 auf 0,92) | Leicht nachgedunktelt, leichter Gelbstich |

**Tabelle 9: Xenotest Ergebnisse nach 7500h Xenotest Bewitterung**

| Probe | ΔTransmission (7500h Xenotest) | ΔGelbwert (7500h Xenotest) | Visuelle Beurteilung (7500h Xenotest) |
|---|---|---|---|
| Plexiglas 8N | -0,62 | +0,57 (0,35 - 0,92) | Leicht nachgedunkelt, leichter Gelbstich |
| Plexiglas 8N + 0,1 Gew.-% Dispers 755 W | -0,39 | +0,38 (0,56 - 0,94) | Leicht nachgedunkelt, leichter Gelbstich |

Das mit Dispergieradditiv dotierte Plexiglas 8N zeigte nach 7500h eine mit reinem Plexiglas 8N vergleichbare Gelbwert- und Transmissionsveränderung.

### VI.2) Bewitterung an rot eingefärbter Formmasse enthaltend Farbmittel und das Dispergier-Additiv Tego® Dispers 755 W zum Test der Kombination aus Farbmittel und Bindemittel

Probekörper hergestellt aus Material des Versuchs mit D1 (Plexiglas 8N rot) zeigten im Vergleich zu einem entsprechend eingefärbtem Standard-Produkt hergestellt durch Zugabe von Masterbatch (Plexiglas 8N rot) ein vergleichbares Bewitterungsverhalten:

**Tabelle 10: Xenotest Ergebnisse nach 1500h Xenotest Bewitterung an eingefärbtem Plexiglas (Plexiglas 8N rot)**

| Probe | ΔTransmission (1500h Xenotest) | Δx (1500h Xenotest) | Δy (1500h Xenotest) | Visuelle Beurteilung (1500h Xenotest) |
|---|---|---|---|---|
| Plexiglas 8N rot Standard | 0,45 | -0,0024 | 0,0009 | Kaum merklich nachgedunkelt |
| Plexiglas 8N rot D1 | 0,35 | -0,0019 | 0,0005 | Kaum merklich nachgedunkelt |

### VI.2.1) Verarbeitbarkeit:

Plexiglas 8N rot (Material aus D1) zeigt auch nach 100 Schuss aus einer Spritzgussmaschine Typ Arburg 221 bei geschlossenem Zylinder keine Belagsbildung oder sonstige Auffälligkeiten.

### VI.2.2) Ergebnisse der mechanischen Prüfungen

An den jeweiligen Probekörpern wurden Vicat-Erweichungstemperatur, der Schmelzindex MVR sowie im Zugversuch der E-Modul ermittelt.

**Tabelle 11: Mechanische Eigenschaften**

| Merkmal | Plexiglas 8N rot Standard | Plexiglas 8N rot aus D1 | Plexiglas 8N rot aus D2 | Einheit |
|---|---|---|---|---|
| Vicat Ökovicat, B50 | 108,6 | 107,9 | 107,1 | °C |
| MVR 230°C, 3,8 kg | 2,9 | 3,1 | 3,2 | cm³/10 min |
| E-Modul 1mm/min, ISO 527 | 3500 | 3500 | 3500 | MPa |

Anhand der mechanischen Werte der rot eingefärbten Formmassen ist ersichtlich, dass sich die Produkteigenschaften eines mit Masterbatch hergestellten Standard-Materials nicht von den Produkteigenschaften eines mit Tego® 755W-basierter Flüssigfarbe eingefärbten Materials unterscheiden.

### VII) Demonstration der Stabilisierung einer Farbmittelpräparation mittels eines erfindungsgemäß verwendeten Verdickers

In diesem Beispiel wird die grundsätzliche Eignung der Zugabe eines erfindungsgemäß verwendeten Verdickers zur Stabilisierung von Farbmittelpräparationen gezeigt. Als Verdicker wurde Rohagit S mV bzw. S hV verwendet. Von Rohagit S mV wurde eine ca. 10 Gew-%ige Lösung als Stammlösung und von Rohagit S hV wurde eine ca. 5 Gew-%ige Lösung als Stammlösung angesetzt.

Die Viskosität der verdickten Farbmittelpräparation wurde durch visuelle Betrachtung bezüglich des Sedimentationsverhaltens nach 24h im Vergleich zur jeweiligen Farbmittelpräparation ohne Verdicker beurteilt. Hierzu wurden im kleinen Maßstab jeweils bezogen auf das/die Farbmittel 5 Gew-%ige Farbmittelpräparation wie folgt hergestellt:

**Tabelle 12: Zusammensetzungen der Flüssigfarben FF1 und FF2 für die Sedimentationsversuche, wobei FF1 und FF2 jeweils einen Farbmittel-Gehalt von 5 Gew-% aufweisen.**

| Flüssigfarbe | FF1 | FF2 |
|---|---|---|
| Dispergieradditiv | 2,5 Gew-% | 2,5 Gew-% |
| VE-Wasser | 91,8 Gew-% | 91,8 Gew-% |
| Thermoplastrot 454 | 3,96 Gew-% | - |
| Macrolexgelb G | 1,04 Gew-% | 5,0 Gew-% |
| Byk 024 (Entschäumer) | 0,6 Gew-% | 0,6 Gew-% |
| Ebotec MT 15 (Anti-Bakterizid) | 0,07 Gew-% | 0,07 Gew-% |

Diese Dispersion wurde zunächst mittels Dispamat vordispergiert, um Agglomerate zu zerkleinern. Dann wurde die gelbe Dispersion FF 2) aufgeteilt. Ein Teil der Dispersion wurde unverändert in einem 50mL Standzylinder verfüllt, zu den vier übrigen Teilen wurden jeweils 2,5 Vol-% bzw. 5 Vol-% der Stammlösungen an Rohagit S mV und Rohagit S hV zugesetzt, die Dispersionen aufgerührt und dann erst in jeweils einen 50 mL Standzylinder verfüllt.

Übersichten Dispersionen und Ergebnisse der Beurteilung des Sedimentationsverhaltens für FF 1 und FF2 finden sich in den Tabelle 13 und 14

**Tabelle 13:**

| Probenbezeichnung | Nullprobe FF1 | E1 | F1 | G1 | H1 |
|---|---|---|---|---|---|
| Rohagit S mV Stammlösung 10 Gew-%ig | - | 2,5 | - | 2,5 | - |
| Rohagit S hV Stammlösung 5 Gew-% | - | - | 5 | - | 5 |
| Beurteilung Sedimentationsverhalten nach 24h | Sedimentation Farbmittel | keine Sed. | keine Sed. | keine Sed. | keine Sed. |

**Tabelle 14:**

| Probenbezeichnung | Nullprobe FF1 | E2 | F2 | G2 | H2 |
|---|---|---|---|---|---|
| Rohagit S mV Stammlösung 10 Gew-%ig | - | 2,5 | - | 2,5 | - |
| Rohagit S hV Stammlösung 5 Gew-% | - | - | 5 | - | 5 |
| Beurteilung Sedimentationsverhalten nach 24h | Sedimentation Farbmittel | keine Sed. | keine Sed. | keine Sed. | keine Sed. |

Aus den Ergebnissen ist deutlich ersichtbar, dass der Zusatz eines erfindungsgemäß eingesetzten Verdickungsmittels zu den Farbmittelpräparationen einer Sedimentation der Farbmittel entgegenwirkt.

Das zur Verdickung eingesetzte Polymere verbleibt nach Einfärbung einer Formmasse in der Formmasse und wirkt sich nicht nachteilig auf dessen Eigenschaften aus. Dies wurde anhand der Bestimmung der Thermostabilität und der Bewitterungsergebnisse von Formmassen enthaltend Rohagit S überprüft.

Die Thermostabilität des Verdickers Rohagit S hv wurde dazu durch eine Abmischung aus Plexiglas®-Formmasse 8N mit 0,01% Rohagit S hv durch eine Thermostabilitätsprüfung bei 290°C überprüft. Jeweils 0,01% Verdicker wurden einkompoundiert und anschließend das Compound/Granulat bei 290°C spritzgegossen. Aus den Spritzlingen wurden Fließpressplättchen der Dicke 3 mm bei 210 °C hergestellt. Der Gelbwert der Formmasse enthaltend den Verdicker betrug 0,7.

Die Thermostabilität des Verdickers Rohagit S mv wurde ebenfalls durch eine Abmischung aus Plexiglas®-Formmasse 8N mit 0,01% Rohagit S mV in einer Thermostabilitätsprüfung bei 290°C überprüft. Der Gelbwert der Formmasse enthaltend den Verdicker betrug 0,8.

Der Xenotest an einer rot eingefärbten Plexiglas®-Formmasse 8N enthaltend ein Methacrylsäure-Copolymer entsprechend Rohagit S führte nach 10000h (Probendicke 3mm, Lichtart A/2°) genau wie beim Vergleichsmaterial Plexiglas®-Formmasse 8N ohne Verdicker-Polymer zu keiner Rißbildung.

## Patentansprüche

1. Verwendung einer wässrigen Farbmittelpräparation zur Einfärbung von thermoplastischen Kunststoffen,
wobei die wässrige Farbmittelpräparation
a) 1 Gew-% bis 49 Gew.-% Dispergieradditiv mit einem Masseverlust des reinen Dispergieradditivs in getrockneter Form von maximal 15 Gew.-%, bevorzugt 0,1 bis 10 Gew.-%, besonders bevorzugt 0,5 bis 7 Gew.-%, ganz besonders bevorzugt 0,5 bis 5 Gew.-% und speziell bevorzugt 1 bis 4 Gew.-% bei isothermer thermogravimetrischer Analyse für 60 min bei 260°C,
b) 0,5 Gew-% bis 50 Gew.-% eines organischen löslichen Farbstoffs und
c) 0 Gew-% bis 50 Gew.-% Hilfsstoffe, und
d) 0 Gew-% bis 98,5 Gew.-% Wasser, bevorzugt VE-Wasser, enthält, wobei sich die Gewichtsteile der Komponenten a) bis d) zu 100 Gew.-% ergänzen; und
als Dispergieradditiv
• ein hochmolekulares Copolymer, umfassend zumindest Maleinsäureanhydrid, Styrol und ein Aminopolyether als Monomereinheiten; oder
• ein Copolymer der Methacrylsäure mit hydrophoben Methacrylat; oder
• Copolymere von Polyethern, bevorzugt Ethylen-, Propylen- und/oder Butylenoxid, und Styroloxid
verwendet wird, wobei
der organische lösliche Farbstoff ein Anthrapyrimidin, Chinophthalon, Perinon oder Monoazofarbstoff ist, und
die Bestimmung des Masseverlusts des reinen Dispergieradditivs in getrockneter Form mittels einer Thermowaage mit einer Heizrate von 5 K/min bis 260°C und anschließender 60 min isothermer Analyse bei 260°C erfolgt, wobei das Dispergieradditiv vor der Messung nicht konditioniert sondern bis zur Massenkonstanz in einem Trockenofen getrocknet wird; und die Bestimmung des Masseverlusts von einem Perlpolymerisat am festen Perlpolymerisat durchgeführt wird.

2. Verwendung nach Anspruch 1, **dadurch gekennzeichnet, dass** der Anteil des Dispergieradditivs in der wässrigen Farbmittelpräparation zwischen 5 Gew.-% und 45 Gew.-%, bevorzugt 10 Gew.-% bis 40 Gew.-% und besonders bevorzugt 20 Gew.-% bis 35 Gew.-%, jeweils bezogen auf die Gesamtmenge der Farbmittelpräparation, beträgt.

3. Verwendung nach Anspruch 1 oder 2,
**dadurch gekennzeichnet, dass** als Hilfsstoff ein Verdicker, insbesondere ein carboxylatgruppenhaltiges Polymer oder eine Cellulose, insbesondere Ethylcellulose, enthalten ist.

4. Thermoplastische Kunststoffe, **dadurch gekennzeichnet, dass** sie mit einer wässrigen Farbmittelpräparation eingefärbt sind,
wobei die wässrige Farbmittelpräparation
a) 1 Gew-% bis 49 Gew.-% Dispergieradditiv mit einem Masseverlust des reinen Dispergieradditivs in getrockneter Form von maximal 15 Gew.-%, bevorzugt 0,1 bis 10 Gew.-%, besonders bevorzugt 0,5 bis 7 Gew.-%, ganz besonders bevorzugt 0,5 bis 5 Gew.-% und speziell bevorzugt 1 bis 4 Gew.-% bei isothermer thermogravimetrischer Analyse für 60 min bei 260°C,
b) 0,5 Gew-% bis 50 Gew.-% eines organischen löslichen Farbstoffs und
c) 0 Gew-% bis 50 Gew.-% Hilfsstoffe, und
d) 0 Gew-% bis 98,5 Gew.-% Wasser, bevorzugt VE-Wasser, enthält, wobei sich die Gewichtsteile der Komponenten a) bis d) zu 100 Gew.-% ergänzen; und
als Dispergieradditiv
• ein hochmolekulares Copolymer, umfassend zumindest Maleinsäureanhydrid, Styrol und ein Aminopolyether als Monomereinheiten; oder
• ein Copolymer der Methacrylsäure mit hydrophoben Methacrylat; oder
• Copolymere von Polyethern, bevorzugt Ethylen-, Propylen- und/oder Butylenoxid, und Styroloxid
verwendet wird, wobei
der organische lösliche Farbstoff ein Anthrapyrimidin, Chinophthalon, Perinon oder Monoazofarbstoff ist, und
die Bestimmung des Masseverlusts des reinen Dispergieradditivs in getrockneter Form mittels einer Thermowaage mit einer Heizrate von 5 K/min bis 260°C und anschließender 60 min isothermer Analyse bei 260°C erfolgt, wobei das Dispergieradditiv vor der Messung nicht konditioniert sondern bis zur Massenkonstanz in einem Trockenofen getrocknet wird; und die Bestimmung des Masseverlusts von einem Perlpolymerisat am festen Perlpolymerisat durchgeführt wird.

5. Poly(alkyl)(meth)acrylat **dadurch gekennzeichnet, dass** es mit einer wässrigen Farbmittelpräparation eingefärbt ist,
wobei die wässrige Farbmittelpräparation
a) 1 Gew-% bis 49 Gew.-% Dispergieradditiv mit einem Masseverlust des reinen Dispergieradditivs in getrockneter Form von maximal 15 Gew.-%, bevorzugt 0,1 bis 10 Gew.-%, besonders bevorzugt 0,5 bis 7 Gew.-%, ganz besonders bevorzugt 0,5 bis 5 Gew.-% und speziell bevorzugt 1 bis 4 Gew.-% bei isothermer thermogravimetrischer Analyse für 60 min bei 260°C,
b) 0,5 Gew-% bis 50 Gew.-% eines organischen löslichen Farbstoffs und
c) 0 Gew-% bis 50 Gew.-% Hilfsstoffe, und
d) 0 Gew-% bis 98,5 Gew.-% Wasser, bevorzugt VE-Wasser, enthält, wobei sich die Gewichtsteile der Komponenten a) bis d) zu 100 Gew.-% ergänzen; und
als Dispergieradditiv
• ein hochmolekulares Copolymer, umfassend zumindest Maleinsäureanhydrid, Styrol und ein Aminopolyether als Monomereinheiten; oder
• ein Copolymer der Methacrylsäure mit hydrophoben Methacrylat; oder
• Copolymere von Polyethern, bevorzugt Ethylen-, Propylen- und/oder Butylenoxid, und Styroloxid
verwendet wird; wobei
der organische lösliche Farbstoff ein Anthrapyrimidin, Chinophthalon, Perinon oder Monoazofarbstoff ist, und
die Bestimmung des Masseverlusts des reinen Dispergieradditivs in getrockneter Form mittels einer Thermowaage mit einer Heizrate von 5 K/min bis 260°C und anschließender 60 min isothermer Analyse bei 260°C erfolgt, wobei das Dispergieradditiv vor der Messung nicht konditioniert sondern bis zur Massenkonstanz in einem Trockenofen getrocknet wird; und die Bestimmung des Masseverlusts von einem Perlpolymerisat am festen Perlpolymerisat durchgeführt wird.

6. Verfahren zur Einfärbung von thermoplastischen Kunststoffen,
**dadurch gekennzeichnet, dass** man
eine wässrige Farbmittelpräparation verwendet,
wobei die wässrige Farbmittelpräparation
a) 1 Gew-% bis 49 Gew.-% Dispergieradditiv mit einem Masseverlust des reinen Dispergieradditivs in getrockneter Form von maximal 15 Gew.-%, bevorzugt 0,1 bis 10 Gew.-%, besonders bevorzugt 0,5 bis 7 Gew.-%, ganz besonders bevorzugt 0,5 bis 5 Gew.-% und speziell bevorzugt 1 bis 4 Gew.-% bei isothermer thermogravimetrischer Analyse für 60 min bei 260°C,
b) 0,5 Gew-% bis 50 Gew.-% eines organischen löslichen Farbstoffs und
c) 0 Gew-% bis 50 Gew.-% Hilfsstoffe, und
d) 0 Gew-% bis 98,5 Gew.-% Wasser, bevorzugt VE-Wasser, enthält, wobei sich die Gewichtsteile der Komponenten a) bis d) zu 100 Gew.-% ergänzen; und
als Dispergieradditiv
• ein hochmolekulares Copolymer, umfassend zumindest Maleinsäureanhydrid, Styrol und ein Aminopolyether als Monomereinheiten; oder
• ein Copolymer der Methacrylsäure mit hydrophoben Methacrylat; oder
• Copolymere von Polyethern, bevorzugt Ethylen-, Propylen- und/oder Butylenoxid, und Styroloxid
verwendet wird; wobei
der organische lösliche Farbstoff ein Anthrapyrimidin, Chinophthalon, Perinon oder Monoazofarbstoff ist, und
die Bestimmung des Masseverlusts des reinen Dispergieradditivs in getrockneter Form mittels einer Thermowaage mit einer Heizrate von 5 K/min bis 260°C und anschließender 60 min isothermer Analyse bei 260°C erfolgt, wobei das Dispergieradditiv vor der Messung nicht konditioniert sondern bis zur Massenkonstanz in einem Trockenofen getrocknet wird; und die Bestimmung des Masseverlusts von einem Perlpolymerisat am festen Perlpolymerisat durchgeführt wird.

7. Verfahren nach Anspruch 6, **dadurch gekennzeichnet, dass** man als thermoplastischen Kunststoff Poly(alkyl)(meth)acrylat verwendet.

8. Verfahren nach Anspruch 6 oder 7, **dadurch gekennzeichnet, dass** man als thermoplastischen Kunststoff ein schlagzähmodifiziertes Poly(alkyl)(meth)acrylat verwendet.

9. Thermoplastische Kunststoffformmasse, erhältlich nach einem Verfahren nach einem der Ansprüche 6 bis 8.

10. Kunststoffformkörper, hergestellt durch Spritzguss oder Extrusion der in Anspruch 9 beschriebenen thermoplastischen Kunststoffformmasse.

## Claims

1. Use of an aqueous colorant preparation for colouring of thermoplastic polymers,
wherein the aqueous colorant preparation comprises
a) 1% by weight to 49% by weight of dispersing additive with a mass loss of the pure dispersing additive in dried form of not more than 15% by weight, preferably 0.1 to 10% by weight, more preferably 0.5 to 7% by weight, even more preferably 0.5 to 5% by weight and especially preferably 1 to 4% by weight in isothermal thermogravimetric analysis at 260°C for 60 min,
b) 0.5% by weight to 50% by weight of an organic soluble dye and
c) 0% by weight to 50% by weight of assistants, and
d) 0% by weight to 98.5% by weight of water, preferably demineralized water, where the portions by weight of components a) to d) add up to 100% by weight; and
• a high molecular weight copolymer comprising at least maleic anhydride, styrene and an amino polyether as monomer units; or
• a copolymer of methacrylic acid with hydrophobic methacrylate; or
• copolymers of polyethers, preferably ethylene oxide, propylene oxide and/or butylene oxide, and styrene oxide
is used as dispersing additive, wherein
the organic soluble dye is an anthrapyrimidine, quinophthalone, perinone or monoazo dye, and
the mass loss of the pure dispersing additive is determined in dried form by means of a thermobalance with a heating rate of 5 K/min up to 260°C and subsequent isothermal analysis at 260°C for 60 min, wherein the dispersing additive is not conditioned prior to the measurement but is dried to constant mass in a drying oven; and the determination of the mass loss of a bead polymer is conducted on the solid bead polymer.

2. Use according to Claim 1,
**characterized in that**
the proportion of the dispersing additive in the aqueous colorant preparation is between 5% by weight and 45% by weight, preferably 10% by weight to 40% by weight and more preferably 20% by weight to 35% by weight, based in each case on the total amount of the colorant preparation.

3. Use according to Claim 1 or 2,
**characterized in that**
the assistant present is a thickener, especially a polymer containing carboxylate groups or a cellulose, especially ethyl cellulose.

4. Thermoplastic polymers, **characterized in that** they have been coloured with an aqueous colorant preparation, wherein the aqueous colorant preparation comprises
a) 1% by weight to 49% by weight of dispersing additive with a mass loss of the pure dispersing additive in dried form of not more than 15% by weight, preferably 0.1 to 10% by weight, more preferably 0.5 to 7% by weight, even more preferably 0.5 to 5% by weight and especially preferably 1 to 4% by weight in isothermal thermogravimetric analysis at 260°C for 60 min,
b) 0.5% by weight to 50% by weight of an organic soluble dye and
c) 0% by weight to 50% by weight of assistants, and
d) 0% by weight to 98.5% by weight of water, preferably demineralized water, where the portions by weight of components a) to d) add up to 100% by weight; and
• a high molecular weight copolymer comprising at least maleic anhydride, styrene and an amino polyether as monomer units; or
• a copolymer of methacrylic acid with hydrophobic methacrylate; or
• copolymers of polyethers, preferably ethylene oxide, propylene oxide and/or butylene oxide, and styrene oxide
is used as dispersing additive, wherein
the organic soluble dye is an anthrapyrimidine, quinophthalone, perinone or monoazo dye, and
the mass loss of the pure dispersing additive is determined in dried form by means of a thermobalance with a heating rate of 5 K/min up to 260°C and subsequent isothermal analysis at 260°C for 60 min, wherein the dispersing additive is not conditioned prior to the measurement but is dried to constant mass in a drying oven; and the determination of the mass loss of a bead polymer is conducted on the solid bead polymer.

5. Poly(alkyl)(meth)acrylate, **characterized in that** it has been coloured with an aqueous colorant preparation, wherein the aqueous colorant preparation comprises
a) 1% by weight to 49% by weight of dispersing additive with a mass loss of the pure dispersing additive in dried form of not more than 15% by weight, preferably 0.1 to 10% by weight, more preferably 0.5 to 7% by weight, even more preferably 0.5 to 5% by weight and especially preferably 1 to 4% by weight in isothermal thermogravimetric analysis at 260°C for 60 min,
b) 0.5% by weight to 50% by weight of an organic soluble dye and
c) 0% by weight to 50% by weight of assistants, and
d) 0% by weight to 98.5% by weight of water, preferably demineralized water, where the portions by weight of components a) to d) add up to 100% by weight; and
• a high molecular weight copolymer comprising at least maleic anhydride, styrene and an amino polyether as monomer units; or
• a copolymer of methacrylic acid with hydrophobic methacrylate; or
• copolymers of polyethers, preferably ethylene oxide, propylene oxide and/or butylene oxide, and styrene oxide
is used as dispersing additive; wherein
the organic soluble dye is an anthrapyrimidine, quinophthalone, perinone or monoazo dye, and
the mass loss of the pure dispersing additive is determined in dried form by means of a thermobalance with a heating rate of 5 K/min up to 260°C and subsequent isothermal analysis at 260°C for 60 min, wherein the dispersing additive is not conditioned prior to the measurement but is dried to constant mass in a drying oven; and the determination of the mass loss of a bead polymer is conducted on the solid bead polymer.

6. Process for colouring thermoplastic polymers, **characterized in that**
an aqueous colorant preparation is used, wherein the aqueous colorant preparation comprises
a) 1% by weight to 49% by weight of dispersing additive with a mass loss of the pure dispersing additive in dried form of not more than 15% by weight, preferably 0.1 to 10% by weight, more preferably 0.5 to 7% by weight, even more preferably 0.5 to 5% by weight and especially preferably 1 to 4% by weight in isothermal thermogravimetric analysis at 260°C for 60 min,
b) 0.5% by weight to 50% by weight of an organic soluble dye and
c) 0% by weight to 50% by weight of assistants, and
d) 0% by weight to 98.5% by weight of water, preferably demineralized water, where the portions by weight of components a) to d) add up to 100% by weight; and
• a high molecular weight copolymer comprising at least maleic anhydride, styrene and an amino polyether as monomer units; or
• a copolymer of methacrylic acid with hydrophobic methacrylate; or
• copolymers of polyethers, preferably ethylene oxide, propylene oxide and/or butylene oxide, and styrene oxide
is used as dispersing additive; wherein
the organic soluble dye is an anthrapyrimidine, quinophthalone, perinone or monoazo dye, and
the mass loss of the pure dispersing additive is determined in dried form by means of a thermobalance with a heating rate of 5 K/min up to 260°C and subsequent isothermal analysis at 260°C for 60 min, wherein the dispersing additive is not conditioned prior to the measurement but is dried to constant mass in a drying oven; and the determination of the mass loss of a bead polymer is conducted on the solid bead polymer.

7. Process according to Claim 6,
**characterized in that**
the thermoplastic polymer used is poly(alkyl)(meth)acrylate.

8. Process according to Claim 6 or 7,
**characterized in that**
the thermoplastic polymer used is an impact-modified poly(alkyl)(meth)acrylate.

9. Thermoplastic polymer moulding material obtainable by a process according to any of Claims 6 to 8.

10. Polymer moulding produced by injection moulding or extrusion of the thermoplastic polymer moulding material described in Claim 9.

## Revendications

1. Utilisation d'une préparation aqueuse de colorant pour la coloration de matériaux synthétiques thermoplastiques,
la préparation aqueuse de colorant contenant
a) 1% en poids à 49% en poids d'additif de dispersion, la perte massique de l'additif de dispersion pur sous forme sèche étant d'au maximum 15% en poids, de préférence de 0,1 à 10% en poids, de manière particulièrement préférée de 0,5 à 7% en poids, de manière tout particulièrement préférée de 0,5 à 5% en poids et en particulier de préférence de 1 à 4% en poids lors d'une analyse thermogravimétrique isothermique pendant 60 minutes à 260°C,
b) 0,5% en poids à 50% en poids d'un colorant organique soluble et
c) 0% en poids à 50% en poids d'adjuvants et
d) 0% en poids à 98,5% en poids d'eau, de préférence de l'eau déminéralisée, la somme des parties en poids des composants a) à d) valant 100% en poids ; et
comme additif de dispersion
• un copolymère de haut poids moléculaire, comprenant au moins de l'anhydride de l'acide maléique, du styrène et un aminopolyéther comme motifs monomères ; ou
• un copolymère de l'acide méthacrylique avec un méthacrylate hydrophobe ; ou
• des copolymères de polyéthers, de préférence d'oxyde d'éthylène, d'oxyde de propylène et/ou d'oxyde de butylène, et d'oxyde de styrène étant utilisés
le colorant organique soluble étant une anthrapyrimidine, la quinophtalone, la périnone ou un colorant monoazo et la détermination de la perte massique de l'additif de dispersion pur sous forme sèche étant réalisée au moyen d'une thermobalance à une vitesse de chauffage de 5 K/min à 260°C et par une analyse isothermique consécutive pendant 60 minutes à 260°C, l'additif de dispersion n'étant pas conditionné mais séché dans un four de séchage jusqu'à masse constante avant la mesure ; et la détermination de la perte massique d'un polymère en perles étant réalisée sur le polymère en perles solide.

2. Utilisation selon la revendication 1, **caractérisée en ce que** la proportion d'additif de dispersion dans la préparation aqueuse de colorant se situe entre 5% en poids et 45% en poids, de préférence entre 10% en poids et 40% en poids et de manière particulièrement préférée entre 20% en poids et 35% en poids, à chaque fois par rapport à la quantité totale de la préparation de colorant.

3. Utilisation selon la revendication 1 ou 2, **caractérisée en ce qu'**un épaississant, en particulier un polymère contenant des groupes carboxylate ou une cellulose, en particulier l'éthylcellulose, est contenu comme adjuvant.

4. Matériaux synthétiques thermoplastiques, **caractérisés en ce qu'**ils sont colorés à l'aide d'une préparation aqueuse de colorant,
la préparation aqueuse de colorant contenant
a) 1% en poids à 49% en poids d'additif de dispersion, la perte massique de l'additif de dispersion pur sous forme sèche étant d'au maximum 15% en poids, de préférence de 0,1 à 10% en poids, de manière particulièrement préférée de 0,5 à 7% en poids, de manière tout particulièrement préférée de 0,5 à 5% en poids et en particulier de préférence de 1 à 4% en poids lors d'une analyse thermogravimétrique isothermique pendant 60 minutes à 260°C,
b) 0,5% en poids à 50% en poids d'un colorant organique soluble et
c) 0% en poids à 50% en poids d'adjuvants et
d) 0% en poids à 98,5% en poids d'eau, de préférence de l'eau déminéralisée, la somme des parties en poids des composants a) à d) valant 100% en poids ; et
comme additif de dispersion
• un copolymère de haut poids moléculaire, comprenant au moins de l'anhydride de l'acide maléique, du styrène et un aminopolyéther comme motifs monomères ; ou
• un copolymère de l'acide méthacrylique avec un méthacrylate hydrophobe ; ou
• des copolymères de polyéthers, de préférence d'oxyde d'éthylène, d'oxyde de propylène et/ou d'oxyde de butylène, et d'oxyde de styrène étant utilisés
le colorant organique soluble étant une anthrapyrimidine, la quinophtalone, la périnone ou un colorant monoazo et la détermination de la perte massique de l'additif de dispersion pur sous forme sèche étant réalisée au moyen d'une thermobalance à une vitesse de chauffage de 5 K/min à 260°C et par une analyse isothermique consécutive pendant 60 minutes à 260°C, l'additif de dispersion n'étant pas conditionné mais séché dans un four de séchage jusqu'à masse constante avant la mesure ; et la détermination de la perte massique d'un polymère en perles étant réalisée sur le polymère en perles solide.

5. Poly((méth)acrylate d'alkyle), **caractérisé en ce qu'**il est coloré à l'aide d'une préparation aqueuse de colorant,
la préparation aqueuse de colorant contenant
a) 1% en poids à 49% en poids d'additif de dispersion, la perte massique de l'additif de dispersion pur sous forme sèche étant d'au maximum 15% en poids, de préférence de 0,1 à 10% en poids, de manière particulièrement préférée de 0,5 à 7% en poids, de manière tout particulièrement préférée de 0,5 à 5% en poids et en particulier de préférence de 1 à 4% en poids lors d'une analyse thermogravimétrique isothermique pendant 60 minutes à 260°C,
b) 0,5% en poids à 50% en poids d'un colorant organique soluble et
c) 0% en poids à 50% en poids d'adjuvants et
d) 0% en poids à 98,5% en poids d'eau, de préférence de l'eau déminéralisée, la somme des parties en poids des composants a) à d) valant 100% en poids ; et
comme additif de dispersion
• un copolymère de haut poids moléculaire, comprenant au moins de l'anhydride de l'acide maléique, du styrène et un aminopolyéther comme motifs monomères ; ou
• un copolymère de l'acide méthacrylique avec un méthacrylate hydrophobe ; ou
• des copolymères de polyéthers, de préférence d'oxyde d'éthylène, d'oxyde de propylène et/ou d'oxyde de butylène, et d'oxyde de styrène étant utilisés le colorant organique soluble étant une anthrapyrimidine, la quinophtalone, la périnone ou un colorant monoazo et la détermination de la perte massique de l'additif de dispersion pur sous forme sèche étant réalisée au moyen d'une thermobalance à une vitesse de chauffage de 5 K/min à 260°C et par une analyse isothermique consécutive pendant 60 minutes à 260°C, l'additif de dispersion n'étant pas conditionné mais séché dans un four de séchage jusqu'à masse constante avant la mesure ; et la détermination de la perte massique d'un polymère en perles étant réalisée sur le polymère en perles solide.

6. Procédé pour la coloration de matériaux synthétiques thermoplastiques, **caractérisé en ce qu'**on utilise une préparation aqueuse de colorant,
la préparation aqueuse de colorant contenant
a) 1% en poids à 49% en poids d'additif de dispersion, la perte massique de l'additif de dispersion pur sous forme sèche étant d'au maximum 15% en poids, de préférence de 0,1 à 10% en poids, de manière particulièrement préférée de 0,5 à 7% en poids, de manière tout particulièrement préférée de 0,5 à 5% en poids et en particulier de préférence de 1 à 4% en poids lors d'une analyse thermogravimétrique isothermique pendant 60 minutes à 260°C,
b) 0,5% en poids à 50% en poids d'un colorant organique soluble et
c) 0% en poids à 50% en poids d'adjuvants et
d) 0% en poids à 98,5% en poids d'eau, de préférence de l'eau déminéralisée, la somme des parties en poids des composants a) à d) valant 100% en poids ; et
comme additif de dispersion
• un copolymère de haut poids moléculaire, comprenant au moins de l'anhydride de l'acide maléique, du styrène et un aminopolyéther comme motifs monomères ; ou
• un copolymère de l'acide méthacrylique avec un méthacrylate hydrophobe ; ou
• des copolymères de polyéthers, de préférence d'oxyde d'éthylène, d'oxyde de propylène et/ou d'oxyde de butylène, et d'oxyde de styrène étant utilisés le colorant organique soluble étant une anthrapyrimidine, la quinophtalone, la périnone ou un colorant monoazo et la détermination de la perte massique de l'additif de dispersion pur sous forme sèche étant réalisée au moyen d'une thermobalance à une vitesse de chauffage de 5 K/min à 260°C et par une analyse isothermique consécutive pendant 60 minutes à 260°C, l'additif de dispersion n'étant pas conditionné mais séché dans un four de séchage jusqu'à masse constante avant la mesure ; et la détermination de la perte massique d'un polymère en perles étant réalisée sur le polymère en perles solide.

7. Procédé selon la revendication 6, **caractérisé en ce qu'**on utilise, comme matériau synthétique thermoplastique, du poly((méth)acrylate d'alkyle).

8. Procédé selon la revendication 6 ou 7, **caractérisé en ce qu'**on utilise, comme matériau synthétique thermoplastique, du poly((méth)acrylate d'alkyle) à résilience modifiée.

9. Masse de moulage en matériau synthétique thermoplastique, pouvant être obtenue par un procédé selon l'une quelconque des revendications 6 à 8.

10. Corps façonné en matériau synthétique, fabriqué par moulage par injection ou par extrusion de la masse de moulage en matériau synthétique thermoplastique décrite dans la revendication 9.
